(19) **Europäisches Patentamt / European Patent Office / Office européen des brevets**

(11) **EP 1 298 462 B1**

(12) **EUROPEAN PATENT SPECIFICATION**

(45) Date of publication and mention
of the grant of the patent:
**01.09.2010 Bulletin 2010/35**

(51) Int Cl.:
***G02B 6/122*** *(2006.01)*

(21) Application number: **02256613.7**

(22) Date of filing: **24.09.2002**

(54) **Optical wave guide and method for producing the same**

Optischer Wellenleiter und zugehöriges Herstellungsverfahren

Guide d'ondes optiques et son procédé de fabrication

(84) Designated Contracting States:
**AT BE BG CH CY CZ DE DK EE ES FI FR GB GR IE IT LI LU MC NL PT SE SK TR**

(30) Priority: **28.09.2001 JP 2001304616**

(43) Date of publication of application:
**02.04.2003 Bulletin 2003/14**

(73) Proprietor: **OMRON CORPORATION**
**Kyoto-shi, Kyoto 600-8530 (JP)**

(72) Inventors:
• **Higuchi, M.,**
**Omron Corporat.,**
**801 Minamifudodo-cho**
**Kyoto-shi,**
**Kyoto 600-8530 (JP)**
• **Takahashi, T.,**
**Omron Corp.,**
**801 Minamifudodo-cho**
**Kyoto-shi,**
**Kyoto 600-8530 (JP)**
• **Totani, H.,**
**Omron Corporat.,**
**801 Minamifudodo-cho**
**Kyoto-shi,**
**Kyoto 600-8530 (JP)**
• **Yasuda, N.,**
**Omron Corporat.,**
**801 Minamifudodo-cho**
**Kyoto-shi,**
**Kyoto 600-8530 (JP)**

• **Hosokawa, H.,**
**Omron Corporat,**
**801 Minamifudodo-cho**
**Kyoto-shi,**
**Kyoto 600-8530 (JP)**
• **Sato, F.,**
**Omron Corporation,**
**801 Minamifudodo-cho**
**Kyoto-shi,**
**Kyoto 600-8530 (JP)**

(74) Representative: **Calderbank, Thomas Roger et al**
**Mewburn Ellis LLP**
**33 Gutter Lane**
**London**
**EC2V 8AS (GB)**

(56) References cited:
**EP-A- 1 099 964     DE-A- 19 721 721**

• **PATENT ABSTRACTS OF JAPAN vol. 014, no. 358 (P-1087), 2 August 1990 (1990-08-02) & JP 02 131202 A (OMRON TATEISI ELECTRON CO), 21 May 1990 (1990-05-21)**
• **PATENT ABSTRACTS OF JAPAN vol. 1997, no. 08, 29 August 1997 (1997-08-29) & JP 09 101425 A (HITACHI CABLE LTD), 15 April 1997 (1997-04-15)**
• **PATENT ABSTRACTS OF JAPAN vol. 1998, no. 02, 30 January 1998 (1998-01-30) & JP 09 281351 A (SHARP CORP), 31 October 1997 (1997-10-31)**

EP 1 298 462 B1

## Description

The present invention relates to an optical wave guide and a method for producing the same.

In an optical wave guide according to the prior art, quartz was employed as its material, and a core and a clad were formed on the quartz by means of ion implantation, ion exchange, or the like. Therefore, its production process required a semiconductor production process employing highly priced facilities and devices, leading to high costs.

For this reason, some trials have been conducted wherein low costs of optical wave guides are attained by producing optical wave guides by reproduction method (or stamper method). The most simple and low cost method in reproduction methods is the one wherein only a core material (transparent resin) is applied onto the surface of a cladding substrate on which a concave slot to be an optical wave guide core is formed by a stamper, or the other wherein an applied core material is pressed flat. However, only application of a core material brings about concaves and convexes on the surface of core, and light will reflect diffusely on the surface of core and light in the core will leak out. And in the method to press an applied core material flat, light in the core will leak out through core material pressed and extended on the surface of a cladding layer. As a result, in these methods, deterioration of characteristics such as decline of S/N ratio of light signal and the like will occur, therefore, it has been impossible to produce optical wave guides that meet required standards.

Accordingly, the following improved reproduction methods have been proposed conventionally. For instance, according to the method for producing a high polymer optical wave guide disclosed in Patent Publication (Unexamined) No.63-281351, a concave slot to be optical wave guide core is formed on the surface of a cladding substrate by means of reproduction using a stamper, and a core material (transparent resin) is flown into the concave slot. And after this core material hardens, excessive core material protruding out from the concave slot is cut out, thereby an optical wave guide core is formed in the concave slot.

While, according to the method for producing a high polymer optical wave guide disclosed in Patent Publication (Unexamined) No.9-281351, core material is applied into core slots reproduced on a cladding substrate, and before this core material hardens, unnecessary core material protruding out from the concave slot is scraped off by means of a rubber pallet, a scraper, and the like, thereafter the core material is hardened.

These reproduction methods in the prior art enable to produce optical wave guides with simple production facilities, and through simple production process, therefore, they are advantageous in producing extremely low priced optical wave guides. On the other hand, these method for producing optical wave guides by reproduction method have had the following problems.

In the first place, in the former method wherein core material is cut off after core material hardens, the refractive indexes of cladding substrate and core are not so large, accordingly the border surface of core and cladding is hard to see, consequently it is difficult to judge to which portion core should be cut off. And when core is removed at one time by grinding, since the application thickness of applied core material and the thickness of cladding substrate are uneven, unnecessary portion of core material may be removed completely, or cladding substrate may be cut off excessively. And if unnecessary portion of core material is left, leakage of light cannot be prevented and yield decreases, and if cladding substrate is cut to excess, core size changes, leading to optical wave guides having different characteristics. On the other hand, if core is to be cut carefully and individually, labor degree increases, and productivity decreases, as a result, product costs become high, which has been a problem with the prior art.

In the next place, in the latter method wherein core material is scraped off before core material hardens, it is difficult to completely remove core material in not hardened status by means of a rubber pallet or so, unnecessary core material may be left on cladding substrate. And when unnecessary core material is left partially, it is not possible to shut light up in core, which leads to decrease of yield. And further, if excessive core material is scraped completely by means of a rubber pallet or the like, the surface of core material becomes concave owing to surface tension of core material, and if core material is let to harden in such status, concave in the core surface remains as it is, as a result, shutting light in is deteriorated, and S/N ratio decreases, and different characteristics appear, leading to decline of yield, which has been another problem with the prior art.

By the way, in Patent No.2679760, an optical wave guide where slots are arranged at both sides of core is described, but in this optical wave guide, the top surface of core is not released. And unnecessary core material does not flow from core into slots. While, in Patent Publication (Unexamined) No.9-101425, space is formed at both sides of a concave slot arranged on cladding substrate, but this is for core material remaining in concave slot even after spin coating, and core material in concave slot exists only at the bottom of concave slot, and core material in concave slot does not flow into space side when pressed by upper clad.

The present invention has been made in consideration of the above-mentioned problems in the prior art, accordingly, the present invention aims to provide an optical wave guide that may be produced by reproduction method, and has a structure that prevents or reduces the amount of light (signal) in its inside leaking out from core. Another object of the present invention is to provide a method for producing an optical wave guide that enables production of the same optical wave guide.

According to a first aspect of the invention there is provided a method of producing an optical waveguide on a cladding substrate using a stamper having a mold surface, wherein either a surface of the cladding substrate or the mold surface have at least one slot therein, and either the surface of the cladding substrate or the mold surface have at least one exposed recess; the method comprising:

supplying core material to said slot; and pressing the mold surface onto the substrate to form a core in the slot and on the substrate; wherein:

core material pinched between the substrate and the mold surface over and adjacent said slot is forced into said at least one recess.

In the optical wave guide according to the present invention, core material is filled into a concave portion arranged at interface of a cladding portion, and the above core material is pressed by a mold surface to form a core, and at least one space connecting to the interface of the above cladding portion is arranged, accordingly, core material attaching onto the interface of cladding portion and core material protruding from concave portion may flow into the above space when pressed with the mold surface. As a consequence, it is possible to make core material left on cladding portion interface around core thin enough to prevent light in core from leaking out, in practically and sufficiently short time. And since it is possible to core material left at the interface of cladding portion thin in swift manner, the speed for core material to spread may be made faster, and it is possible to obtain an optical wave guide having high productivity.

In one embodiment according to the present invention, between the above concave portion and the above space, the thickness of the core material existing in the interface of the above cladding portion is $3\mu$m or below. When the thickness of core material at this position is thicker than $3$ $\mu$m, light in core will leak out through core material at this position, therefore, it is preferable to make this thickness $3\mu$m or below.

In one embodiment according to the present invention, the shortest distance between the above concave portion along the interface of the above cladding portion and the above space is $5\mu$m or more. If the distance between the concave portion and the space is set shorter than $5\mu$m, the concave portion and the space are set too close to each other, as a result, even when the thickness of core material is made thin, light in core is likely to leak out into space. Therefore, so as to obtain a distance to prevent light in core from leaking, it is preferable to make the shortest distance between the concave portion and the space $5\mu$m or more.

In another embodiment according to the present invention, in the above space, the core material pushed out by the above mold surface is held at the interface of the above cladding portion. Since unnecessary core material is kept within the space, according to this embodiment, it is possible to make it easy to produce optical wave guides without high precision required for the supply amount of core material to be supplied to the concave portion.

Further, in order so that unnecessary core resin should flow into space and the thickness of core material at the interface of cladding portion should become thin swiftly, it is preferred to set the volume of the above space larger than that of the above concave portion, also it is preferred to set the flat area of the above space larger than that of the above concave portion.

In another embodiment according to the present invention, it is preferred to arrange the above space along the above core. By arranging the space to keep unnecessary core material along core, it is possible to decrease light leakage in almost the entire core.

In another embodiment according to the present invention, it is preferred to release the above space to atmospheric air. If the space is released to atmospheric air, when the amount of unnecessary core material is larger than the volume of the space, it is possible to discharge unnecessary core material from the space to the outside, and even when there is a large amount of excessive core material, it is available to make the core material thickness thin swiftly.

In another embodiment according to the present invention, it is preferred to set the thickness of the above cladding portion in the deepest section of the above space 7 $\mu$m or below. If the thickness of the above cladding portion in the deepest section of the above space is thick, it is difficult to form the interface of the cladding portion horizontally, in forming the cladding portion by means of a stamper or the like, while, if the thickness of the above cladding portion in the deepest section of the above space is set thin, the surface at the lowest position of the stamper or the like is pressed into the position where it contacts the undersurface component (substrate or the like) of the cladding portion through the cladding portion in a thin film status, therefore it is easy to form the interface of the cladding portion horizontally. In concrete, so as to attain such an effect, the thickness of the above cladding portion in the deepest section of the above space may be set $7\mu$m or below.

In another embodiment according to the present invention, it is preferred to arrange the depth of the above space deeper than that of the concave portion arranged in the above cladding portion. If the depth of the above space is deeper than that of the concave portion arranged in the above cladding portion, the thickness of the cladding portion at the bottom of the concave portion will not become thin, consequently, light transmitting through core is unlikely to leak out of the core. Especially, when the thickness of the concave portion arranged in the cladding portion is made thin, the thickness of the cladding portion at the concave portion becomes thin accordingly, however if the thickness of the above space is set deeper than the depth of the concave portion, even if the thickness of the cladding portion at the bottom of the above space becomes thin, it is possible to prevent the thickness of the cladding portion at the bottom of the concave portion from becoming thinner than a specific thickness, and light is unlikely to leak out from the core.

In another embodiment according to the present invention, it is preferred to arrange so that plural cladding portions having concave portions are formed on interface, and core material is dropped down to a substrate and the above core material is extended by a mold surface, and thereby the core material is filled into the above concave portions, and further the above cladding portions are separately cut off from each other, and the side wall surfaces of the above space are inclined. By arranging the side wall surfaces of the above space inclined, it is possible to prevent air bubbles from being caught in core resin flowing into the above space, and also to make preferable the mold release property in forming the cladding portion. Moreover, when core material is filled into each core by expanding core material by means of mold surface, core material overflowing from the concave portion and flowing into the above space can flow smoothly upward on the inclined surfaces of the space once again. Therefore, in the process wherein core material is pressed and extended to plural cladding portions and filled into each concave portion, it is possible to make core material fluidity preferable, and also to make core forming property preferable. Further, by arranging the side wall surfaces of the above space inclined, it is available to ease stress concentration occurring inbetween the cladding portions and a stamper or the like in forming cladding portions, and thereby it is possible to prevent the optical characteristics of cladding portions from becoming uneven.

By structuring an optical communication component by use of an optical wave guide according to the present invention and a connector to be a connecting means of the above optical wave guide, wherein light leakage in optical wave guide can be reduced, it is possible to produce an optical communication component having little signal loss.

According to one embodiment under the present invention, a cladding substrate may be formed on a supporting substrate such as a glass substrate or the like. When a cladding substrate is formed on a supporting substrate such as a glass substrate or the like, it is possible to form a cladding substrate by a stamper or the like too.

In another embodiment according to the present invention, plural optical wave guides may be formed as a body, and a space for letting the core material go out may be formed on the set of the above optical wave guides. Namely, in the case wherein plural optical wave guides are produced as a body on a wafer, it is possible to arrange space not only in optical wave guides but also in the outside area thereof.

By the way, the structural elements described above may be combined as many as possible.

In the drawings:

Fig. 1A shows a cross section of the structure of an optical wave guide according to one embodiment under the present invention. Fig. 1B shows a cross section of the structure of the same optical wave guide, wherein spaces are left in cavities.

Figs. 2A, 2B, and 2C show perspective views for explaining various forms of cladding substrate to be employed in the above optical wave guide.

Figs. 3A, 3B, and 3C show perspective views for explaining a process for producing a cladding substrate by use of a stamper.

Figs. 4A, 4B, 4C, and 4D show perspective views for explaining a process for producing an optical wave guide by use of the above cladding substrate.

Figs. 5A, 5B, 5C, and 5D show cross sectional views for explaining a method for pressing a cladding substrate onto which transparent resin has been applied, by a stamper without catching air bubbles in.

Fig. 6 shows a top view for explaining a method for forming cavities on a wafer on which optical wave guides have been formed.

Fig. 7 shows a top view for explaining another method for forming cavities on a wafer on which optical wave guides have been formed.

Fig. 8 shows a top view for explaining further another method for forming cavities on a wafer on which optical wave guides have been formed.

Fig. 9 shows a perspective view of a cutaway at line A-A in Fig. 8.

Figs. 10A, 10B. 10C, and 10D show cross sectional views for explaining a process for pressing and expanding transparent resin into concave slots and thereby forming cores.

Figs. 11A, 11B, 11C, and 11D show cross sectional views for explaining a method for producing an optical wave guide according to another embodiment under the present invention.

Figs. 12A, 12B, 12C, 12D, and 12E show cross sectional views for explaining a method for producing an optical wave guide according to another embodiment under the present invention.

Figs. 13A, 13B, 13C, 13D, 13E, and 13F show cross sectional views for explaining a method for producing an optical wave guide according to another embodiment under the present invention.

Figs. 14A, 14B, 14C, and 14D show cross sectional views for explaining a method for producing an optical wave guide according to another embodiment under the present invention.

Figs. 15A, 15B, 15C, 15D, and 15E show cross sectional views for explaining a method for producing an optical wave guide according to another embodiment under the present invention.

Figs. 16A, 16B, 16C, and 16D show cross sectional views for explaining a method for producing an optical wave guide according to another embodiment under the present invention.

Figs. 17A, 17B, 17C, and 17D show cross sectional views of other structures of optical wave guides.

Figs. 18A, 18B, 18C, and 18D show top views of various forms of multi mode optical wave guides wherein cores are branched and combines.

Fig. 19 shows a wafer wherein plural optical wave guides are formed.

Fig. 20 shows a perspective view of an optical wave guide having a core 4 of a curved shape.

Fig. 21A shows a top view of further another preferred embodiment according to the present invention, while Fig. 21B shows an enlarged cross sectional view along the line B-B of Fig. 21A.

Fig. 22 shows a schematic diagram for explaining a method for producing an optical wave guide according to another embodiment under the present invention.

Fig. 23 shows a schematic diagram of a machine for arranging concave slots and cavities in the above lower cladding sheet shown in Fig. 22 in advance.

Fig. 24 shows a cross sectional view of a lower cladding sheet formed on the device in Fig. 23.

Fig. 25A shows a schematic diagram of another device for arranging in advance concave slots and cavities in the lower cladding sheet shown in Fig. 22, while Fig. 25B shows a cross sectional view of a lower cladding sheet formed by the device concerned.

Fig. 26 shows a schematic diagram for explaining a method for producing an optical wave guide according to another embodiment under the present invention.

Figs. 27A, 27B, 27C, and 27D show cross sectional views for explaining a method for producing an optical wave guide according to another embodiment under the present invention.

Figs. 28A, 28B, and 28C show cross sectional views for explaining intermediate processes in a method for producing an optical wave guide according to another embodiment under the present invention.

Fig. 29 shows a cross sectional view of an optical wave guide according to another embodiment under the present invention.

Figs. 30A and 30B show cross sectional views of an optical wave guide, wherein plural cores are formed on the upper surface of the cladding substrate.

Fig. 31A shows a cross sectional view of an optical wave guide according to another embodiment under the present invention, while Fig. 31B shows a schematic diagram of part of the production process just after the abovementioned lower cladding portion is formed.

Fig. 32 shows a cross sectional view of a structure of an optical wave guide according to another embodiment under the present invention.

Fig. 33 shows a perspective view of an optical transceiver according to the present invention.

Fig. 34 shows a schematic perspective view of a structure of an optical switch according to the present invention.

Fig. 35 shows a schematic perspective view of another structure of an optical switch according to the present invention.

Figs. 36A and 36B show perspective and sectional views of a concrete structure of an optical switch shown in Fig. 34.

Fig. 37 shows a perspective view of a structure of an optical attenuator according to the present invention.

Fig. 38 shows a structure of an AWG optical wave guide circuit.

Fig. 39 shows a perspective view of a communication system according to the present invention.

Figs. 40A and 40B show a top view and a cross sectional view of optical wave guides employed in the above communication system.

Fig. 41 shows an enlarged perspective view of part of the communication system in Fig. 39.

Fig. 42 shows a perspective view of another structure of a communication system according to the present invention.

Fig. 43 shows a cross sectional view for explaining the functions of the above communication system.

Figs. 44A and 44B show schematic diagrams for explaining other embodiments of a method for optical combination of a light emitting portion and an optical wave guide.

Embodiments of the present invention will now be described in detail.

First Embodiment

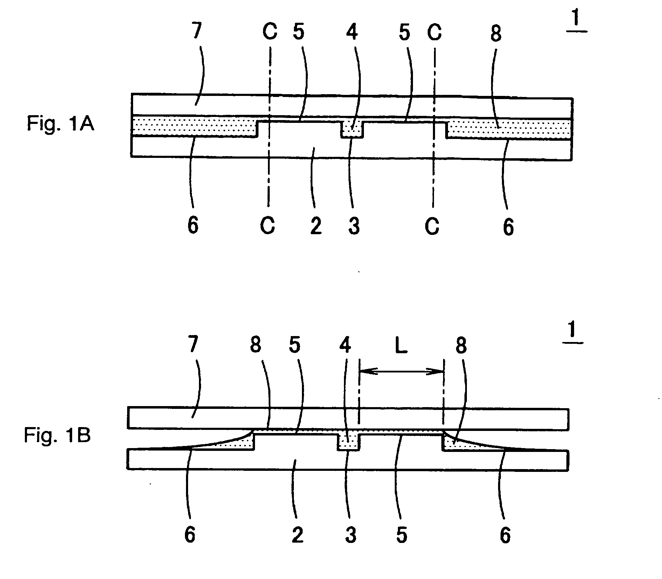

Fig. 1A shows a cross section of the structure of an optical wave guide 1 according to a preferred embodiment under the present invention. In this optical wave guide 1, a core 4 is formed on a concave slot 3 of a cladding substrate 2. The cladding substrate 2 is formed of a transparent resin having a relatively high refractive index, and on part of the top thereof, the concave slot 3 to be an optical wave guide core is arranged, and a flat portion 5 is formed on the area of the top of the cladding substrate 2 adjacent to the concave slot 3, and at the area apart from the flat portion 5 to the concave slot 3, a relatively large cavity 6 is formed on the upper surface of the cladding substrate 2. And in the concave slot 3, a transparent resin having a higher refractive index than that of the transparent resin used to the cladding substrate 2 is embedded to form the core 4, and on the upper surface of the cladding substrate 2, an upper cladding portion 7 of a plate shape is stuck. The width and height of the core 4 may be around $6\mu$m in the case for a single mode optical wave guide. The core 4 is formed of a transparent resin having a higher refractive index than that of the transparent resin employed to the upper cladding portion 7 and the cladding substrate 2. The transparent resin of the upper cladding portion 7 may be different from the transparent resin of the cladding substrate 2, however, it is preferred to employ an identical resin.

It is ideal that the upper surface of the flat portion 5 and the lower surface of the upper cladding portion 7 are closely adhered to each other, however, a transparent resin 8 that forms the core 4 may expand thin inbetween them. However, the thickness of the transparent resin 8 between the upper cladding portion 7 and the flat portion 5 and the width L of the flat portion 5 must be the thinness and width respectively enough to prevent light (signal) transmitting through the core 4 from leaking from the core 4 via the transparent resin 8 to the cavity 6. For example, the thickness of the transparent resi 8 between the upper cladding portion 7 and the flat portion 5 is set 3$\mu$m or below, preferably 1$\mu$m or below. While, the width of the flat portion 5 is set in the range from 5$\mu$m or more and 5mm or below, preferably around 50$\mu$m.

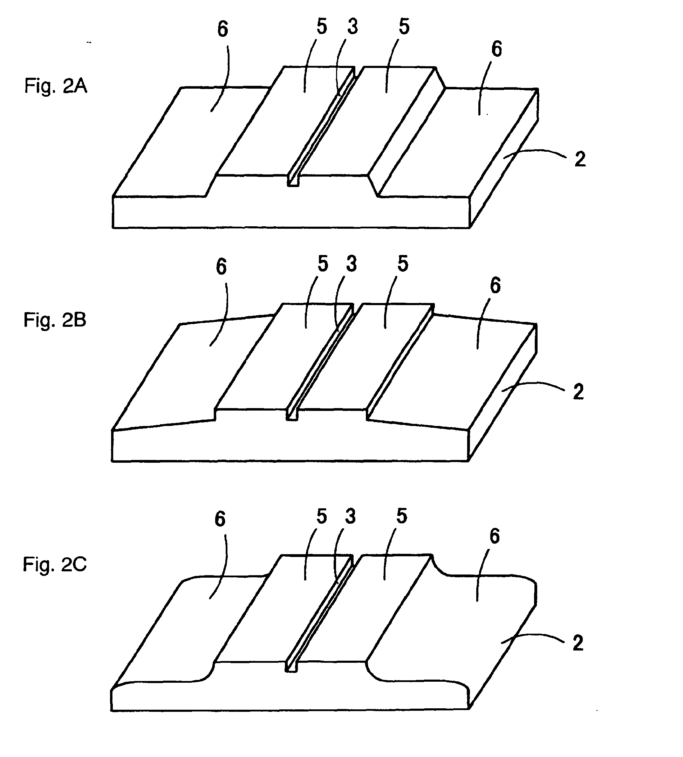

The cavity 6 is the space to absorb excessive transparent resin 8 in forming the core 4, and in the cavity 6, a transparent resin 8 may be filled as shown in Fig. 1A, or space may be left as shown in Fig. 1B. Therefore, in the cavity 6, there should be space only enough to absorb the transparent resin 8 pushed out from the concave slot 3. For example, the volume of the cavity 6 should be set only to be larger than the volume of the concave slot 3. Or the depth of the cavity 6 should be at least 10$\mu$m or more, for example, it may be set 30$\mu$m. And the cavity 6 appears of a rectangular in Figs. 1A and 1B, however, side wall surfaces of the cavity 6 may be arranged inclined as shown in Fig. 2A, or may be made into sloped surfaces by tapering the bottom surface of the cavity 6 as shown in Fig. 2B, or may be formed with moderately curved surfaces of circular shapes or the like as shown in Fig. 2C.

By the way, the optical wave guide 1 illustrated in Fig. 1 may be a final product or an intermediate product. Namely, it may be used as a product of optical wave guide in the shape shown in Fig. 1 as it is, or, part of it wherein part of the cavity 6 is removed by cutting it at the position of the dot line C as shown in Fig. 1 may be made into a final product (therefore, in this case, the cavity 6 does not exist in the optical wave guide of the final product).

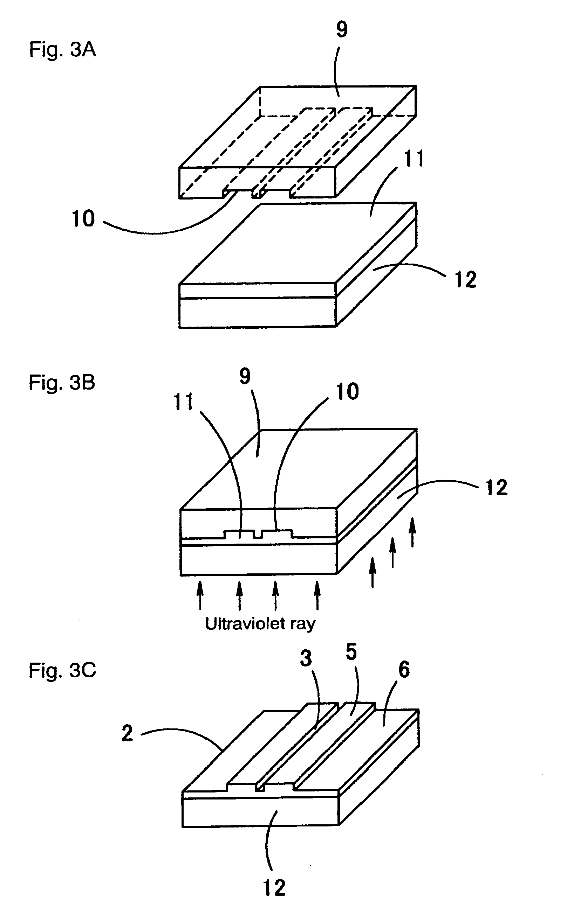

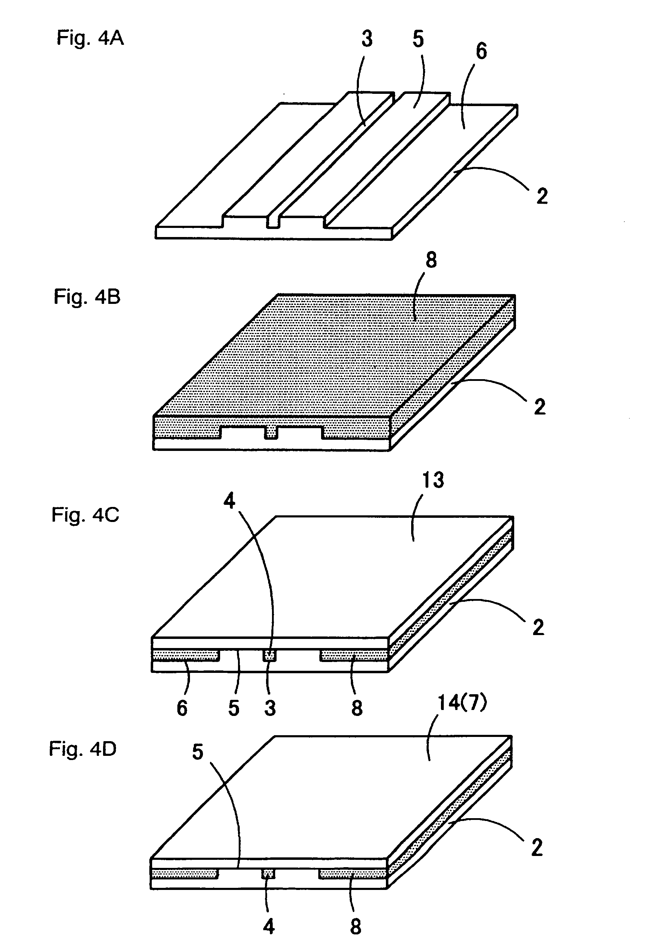

Figs. 3A, 3B and 3C show perspective views for explaining the process to produce a cladding substrate 2 by use of a stamper 9. While, Figs. 4A, 4B, 4C and 4D show perspective views for explaining the process to produce an optical wave guide by use of the cladding substrate 2. The stamper 9 is made of a synthetic resin or a metal, and on the under surface of the stamper 9, concave portions 10 of the same shape as the above cladding substrate 2 (i.e., shape wherein concave and convex are inverted from the cladding substrate 2). Thereby, as shown in Fig. 3A, a transparent resin (ultraviolet ray hardening type cladding resin) 11 for forming the cladding substrate 2 is applied onto the glass substrate 12, thereafter, the stamper 9 is pressed over the transparent resin 11 onto the glass substrate 12, and the transparent resin 11 is pinched between the concave portions 10 of the stamper 9 and the glass substrate 12, and the transparent resin 11 is pressed and expanded onto the entire inside of the concave portions 10. Thereafter, as shown in Fig. 3B, ultraviolet ray (UV ray) is radiated onto the ultraviolet ray hardening type transparent resin 11 via the glass substrate 12, thereby the transparent resin 11 is hardened. When the transparent resin 11 hardens, the stamper 9 is released from the glass substrate 12, then the cladding substrate 2 is formed on the glass substrate 12 as shown in Fig. 3C. On the upper surface of the cladding substrate 2 formed as explained above, flat portions 5 and cavities 6 are formed across the concave slot 3 as mentioned above.

In the following place, as shown in Fig. 4A, the cladding substrate 2 is released from the glass substrate 12 (or, the glass substrate 12 may be left under the cladding substrate 2), thereafter, as shown in Fig. 4B, a transparent resin 8 (ultraviolet ray hardening type core resin) to be core material is applied onto the surface of the cladding substrate 2. By the way, in the place of application, the transparent resin 8 may be supplied onto the surface of the cladding substrate 2 by means of filling, implantation, dropping, spin coating, dip coating, or other method. At this moment, the transparent resin 8 may be applied onto the whole surface of the cladding substrate 2, or may be supplied into only the concave slot 3, or only the flat portions 5. And the transparent resin 8 may be applied into only the cavity 6 (in the case wherein the side surface of the cavity 6 is released), or may be applied so that the inside of the cavity 6 should be space (for example, application is not carried out in the cavity 6). In the case applying the transparent resin 8 on the whole surface of the cladding substrate 2, the transparent resin 8 may be applied so that the surface thereof should be flat, and there should be no damp on the surface as shown in Fig. 4B.

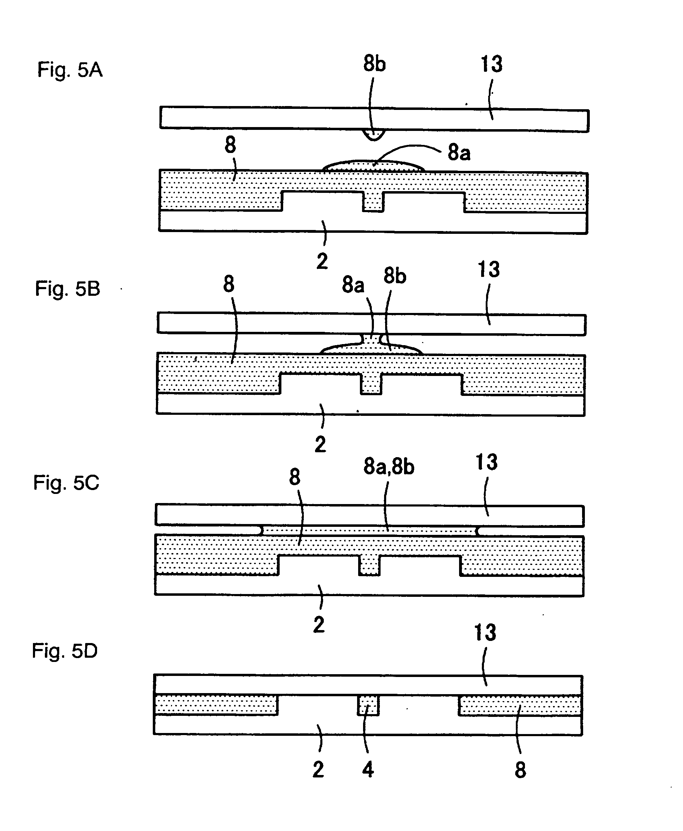

Thereafter, a stamper 13 of a flat plane shape is pressed over the transparent resin 8 onto the cladding substrate 2, as shown in Fig. 4C, the transparent resin 8 on the flat portions 5 is pressed and expanded thin. At this moment, so as to prevent air bubbles from being caught inbetween the stamper 13 and the transparent resin 8, a method shown in Fig. 5 is effective. Namely, as illustrated in Fig. 5A, a transparent resin 8a same as the transparent resin 8 is dropped onto the central portion of the transparent resin 8 applied on the surface of the cladding substrate 2, and a transparent resin 8b same as the transparent resin 8 is attached onto the under surface of the stamper 13 so as to hang down therefrom. Thereafter, the stamper 13 is lowered, and as shown in Fig. 5B, the end of the transparent resin 8b hanging down from the under surface of the stamper 13 is made to contact the transparent resin 8a raising on the cladding substrate 2, and the stamper 13 is lowered further, then as shown in Fig. 5C, the transparent resins 8a and 8b expand from the contact points to the space between the stamper 13 and the transparent resin 8, and as shown in Fig. 5D, the space between the stamper 13 and the transparent resin 8 is filled with the transparent resin 8 (8a, 8b) without catching air bubbles therein.

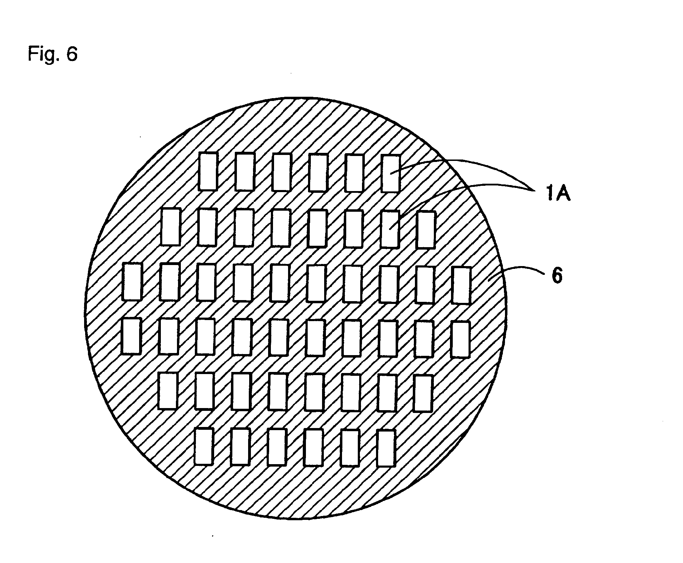

By the way, so as to prevent air bubbles from being caught in, in combination with the above method, or in the place thereof, a method wherein the stamper 13 is pressed and also moved in horizontal direction is also effective. And, in Fig. 5, the method to prevent air bubbles from being caught in, in the case forming a single optical wave guide, was explained, while in general cases, plural optical wave guides are produced on a wafer or the like (Refer to Fig. 6 and its explanation). In such cases, so as to prevent air bubbles from being caught in, instead of attaching the transparent resins 8a and 8b to respective optical wave guides, the transparent resins 8a and 8b may be attached to the cladding substrate side and the under surface of the stamper respectively on the central portion of a wafer, and the transparent resins 8a and 8b may be expanded from the center of the wafer to its circumferential area.

In this manner, when the transparent resin 8 is pressed and expanded between the stamper 13 and the cladding substrate 2 as shown in Fig. 4C, the transparent resin 8 is filled into the concave slot 3 and a core 4 is formed therein, at the same time, excessive transparent resin 8 is brought out into the cavity 6 through the clearance between the flat portion 5 and the stamper 13, and finally, the transparent resin 8 inbetween the flat portion 5 and the stamper 13 is pressed until it is made into an extremely thin layer (for example, a layer whose thickness being 3μm or below, preferably 1μm or below).

Normally, as the thickness of a resin becomes thinner, the flow rate and flow amount thereof will be decreased, and fluidity thereof will be deteriorated, accordingly, the thinner the resin thickness becomes, the longer the time to be required for making the thickness thinner becomes. In concrete, when the thickness of the transparent resin 8 pinched between the under surface of the stamper 13 and the flat portion 5 is defined as h, the viscosity of the transparent resin 8 as $\mu$, the pressing force working onto the transparent resin 8 as $\Delta p$, and the width for the transparent resin 8 fleeing (length of the flat portion 5) as b, and the length for the transparent resin 8 fleeing (width of the flat portion 5) as L, then the flow rate Q for the pressed transparent resin 8 to flow through the clearance between the stamper 13 and the flat portion 5 is expressed by the following equation (1).

$$Q = \frac{bh^3}{12\mu L}\Delta p \quad \cdot \cdot \cdot (1)$$

As shown in the above equation (1), the flow rate Q is proportional to the cube of the thickness h of the transparent resin 8, accordingly, when the thickness of the transparent resin 8 becomes thin, the transparent resin 8 hardly flows through the clearance between the stamper 13 and the flat portion 5. Then, when the fluidity of the transparent resin 8 is increased by making the width L of the flat portion 5 short, it is possible to make the transparent resin 8 thin in swift manner. However, if the width L of the flat portion 5 is shortened to excess, light in the core 4 may leak out through the transparent resin 8 on the flat portion 5. Therefore, it is preferred to make the width L of the flat portion 5 to the range 5μm or more and 5mm or below. In this way, unnecessary transparent resin 8 between the flat portion 5 and the stamper 13 is fleed through the area of the flat portion 5 into the cavity 6, while, the concave slot 3 is sufficiently deep, the transparent resin 8 in the concave slot 3 may flow smoothly in the concave slot 3 without flow rate decreasing even when pressed with the stamper 13, and it is possible to distribute the transparent resin 8 evenly into the concave slot 3.

Herein, with subjects of a model according to the present invention wherein a 6-inch substrate was used and flat portions whose width L being 500μm were formed on both sides of the concave portion, and a cavity was formed in the outside thereof, and another model according to the prior art wherein flat portions of a sufficient width were formed on both sides of the concave portion and a cavity was not formed, and a case wherein resin of viscosity 160cp was applied to the above models respectively, and the models were pressed with a stamper thereby load of 180kg was impressed onto the models was assumed, and time required for the resin to become thin enough to get a specified film thickness was obtained by simulation, and the results are as shown below.

(1) Time required for making the resin thickness from 4 μm to 3μm

Case of the model according to the prior art : around 2 hours

Case of the model according to the present invention : around 0.1 second

(2) Time required for making the resin thickness from 3 μm to 2μm

Case of the model according to the prior art : around 4.6 hours

Case of the model according to the present invention : around 0.2 second

(3) Time required for making the resin thickness from 2 μm to 1μm

Case of the model according to the prior art : around 15.5 hours

Case of the model according to the present invention : around 0.6 second

(4) Time required for making the resin thickness from 1 μm to 0.5μm

Case of the model according to the prior art : around 66 hours

Case of the model according to the present invention : around 2.5 seconds

As shown above, according to the structure under the present invention, the time required for making the film thickness into a desired thinness has appeared to be nearly 1/90000 in comparison with the case of the model according to the prior art.

As a consequence, in this process, by pressurizing the transparent resin 8 sufficiently, and making the thickness of the transparent resin 8 pinched between the flat portions 5 and the stamper 13, and making the thickness thin enough so that light signal transmitting through the core 4 should not leak out via the layer of the transparent resin 8 (it is preferable that the transparent resin 8 not remaining between the stamper 13 and the flat portions 5), it is possible to produce an optical wave guide 1 that does not cause filling shortage of the core 4 or fear of light leakage (signal leakage), by means of reproduction method (stamper method), in short time and in easy and simple manners.

In this manner, after the transparent resin 8 covering the surface of the flat portions 5 is made sufficiently thin, ultraviolet ray is radiated onto the ultraviolet hardening type transparent resin 8 from the back surface side of the cladding substrate 2, thereby the transparent resin 8 is hardened. In the case where the stamper 13 is made of a light transmitting type material, ultraviolet ray may be radiated onto the transparent resin 8 over the stamper 13, and the transparent resin 8 may be hardened. By hardening the transparent resin 8 in such a status where the transparent resin 8 is pressed by the stamper in this manner, there is an advantage that it is possible to decrease hardening contraction of the transparent resin 8.

Then, after the stamper 13 is released from the cladding substrate 2, as shown in Fig. 4D, a transparent ultraviolet ray hardening type cladding resin 14 is applied onto the hardened transparent resin 8 by means of spin coating method, dip coating method or the like, and ultraviolet ray is radiated to harden the cladding resin 14, and the upper cladding portion 7 is made to contact onto the upper surface of the transparent resin 8, and thereby an optical wave guide 1 as the purpose is obtained.

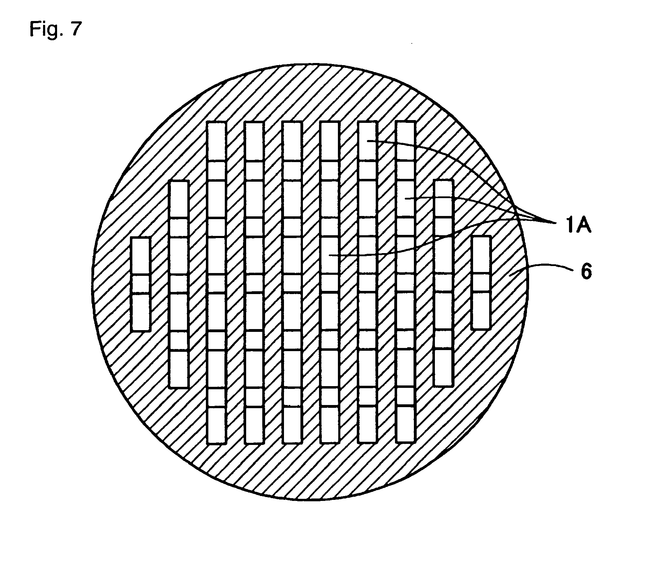

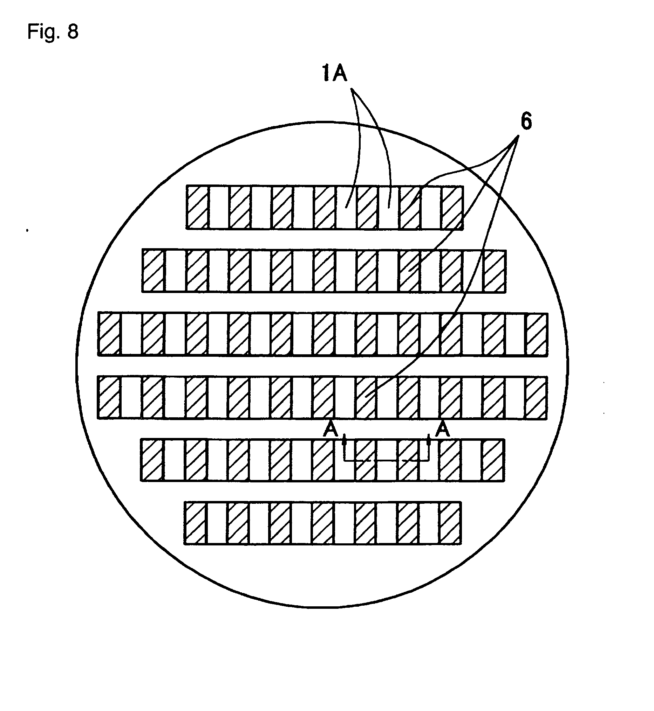

In the explanations heretofore, the case of a single optical wave guide 1 has been explained, while in actual production processes, plural units of optical wave guides are produced at one time, and then divided into individual optical wave guides in final process. For example, in the preferred embodiment shown in Fig. 6, plural optical wave guides 1A are arranged with intervals on a sheet of large glass substrate (wafer) or a cladding substrate or the like. However, optical wave guides 1A herein comprise a core 4 (concave slot 3) and flat portion 5, and may not include a cavity 6. The cavity 6 (the area where the cavity 6 is formed is shown shaded in Fig. 6, as well as in Fig. 7 and Fig. 8) is formed on almost all of other area than areas where optical wave guides 1A are formed, and especially, reaches to the external circumference of the substrate and is released to the outside at the external circumferential surface of the substrate. When to supply the transparent resin 8 onto the cladding substrate, it is important to control the application amount of the transparent resin 8, and to adjust so that the transparent resin should not go out, while in such a structure shown in Fig. 6, excessive transparent resin 8 is discharged from the edge of the substrate. And by releasing the cavity 6 at the edge of the substrate, the pressure of the transparent resin 8 in the cavity 6 will not increase, thereby it is possible to discharge unnecessary transparent resin 8 smoothly from the concave slot 3 and flat portion 5.

And the cavities 6 should not necessarily be formed in grid shape as shown in Fig. 6, but may be formed also as continuous in one direction as shown in Fig. 7.

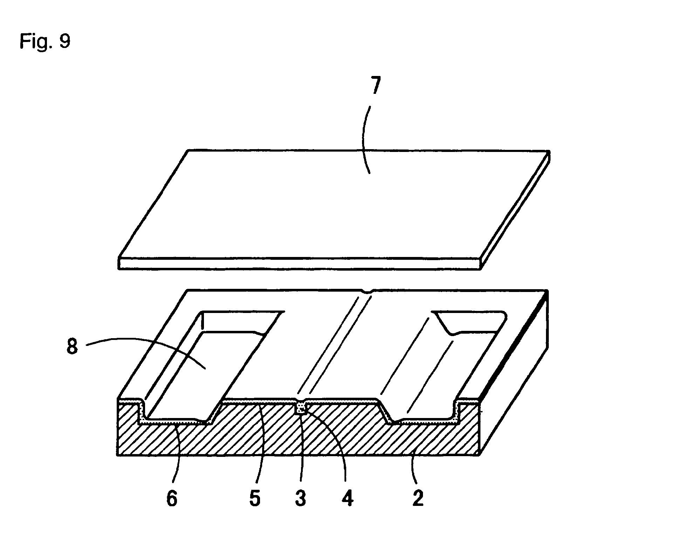

Further, the cavities 6 should not necessarily be connected continuously, but as shown in Fig. 8, the cavities 6 may be arranged as if small ponds lie scattered over the entire substrate. A perspective view at the cross section line A-A in this case is shown in Fig. 9. In Fig. 8, when the method where the transparent resin 8 is applied onto the whole surface of the cladding substrate 2 and pressing is made with the upper cladding portion 7 is employed, there is a fear that air bubbles are caught inbetween the transparent resin 8 or the core 4 and the upper cladding portion 7. Therefore, in most cases, the transparent resin 8 is dropped onto the central portion of the cladding substrate 2 having area of several optical wave guides, and the transparent resin 8 is pressed with the upper cladding portion 7 and expanded from the central portion to circumferential portion, and thereby the transparent resin 8 is filled into each concave slot 3.

And, when pressing to extend the transparent resin 8 dropped onto the central portion, the transparent resin 8 that was pushed out from the concave slot 3 and went into the cavities 6 must be pressed out to the concave slot 3 positioned in the outside thereof, while, if the edges of the cavities 6 are of vertical surfaces, the transparent resin 8 is stopped by the side wall surfaces of the cavities 6, the flow of the transparent resin 8 may be deteriorated, and air bubbles may be caught in the transparent resin 8.

Further, if the side wall surfaces of the cavities 6 are vertical, the thickness of the cladding substrate 2 changes rapidly therein, therefore, when forming the cladding substrate 2 by pressing a stamper, stress concentration occurs at end area adjacent to side wall surfaces of the cavities 6 among the interface (i.e., surface of the area of large thickness where the concave slot 3 is formed) of the cladding substrate 2, and side wall surfaces that should be vertical surfaces may be warped in convex shape, or in concave shape, and deformed unevenly. Therefore, the cladding substrate 2 is deformed, and further, it is difficult to forecast how it is deformed. And, at the occurrence of deformation in side wall surfaces of the cladding substrate 2, there is a fear that it may be difficult to release the stamper, and the cladding substrate 2 may be damaged if the stamper is released forcibly, and dust may occur. And, at occurrence of deformation in the area where the concave slot 3 is formed among the cladding substrate 2, the core shape is also deformed, leading to fluctuations in characteristics owing to loss such as light leakage and so forth. And, at occurrence of stress concentration in the cladding substrate 2, polarization dependency of wave guided light occurs, and characteristics of PDL (Polarization Dependent Loss) may be deteriorated, and other optical characteristics may become uneven, as a result, abnormal external appearances may occur, and characteristics may be fluctuated greatly owing to temperature changes.

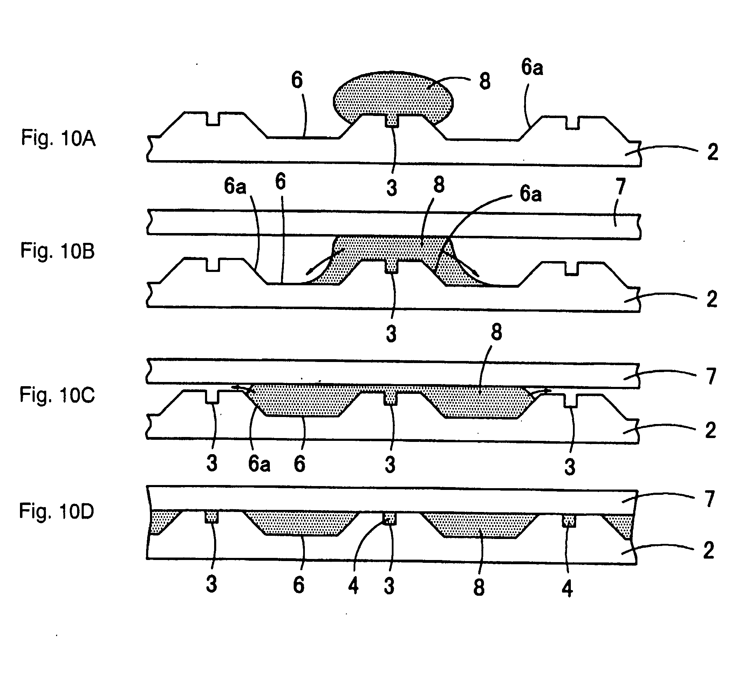

Therefore, in this preferred embodiment, as shown in Fig. 10A, side wall surfaces 6a of the external circumference of the cavities 6 are inclined, thereby fluidity of the transparent resin 8 is improved. Namely, as shown in Fig. 10A, the transparent resin 8 is dropped onto the central portion of the cladding substrate 2, and the transparent resin 8 is pressed by the upper cladding portion 7, and by the transparent resin 8 filled into the concave slot 3, core 4 is formed. Most of the transparent resin 8 overflowing from the concave slot 3 flows along the inclined surfaces of cavities 6 and flows into cavities 6 as shown in Fig. 10B, and when the transparent resin 8 is further expanded, as shown in Fig. 10C, the transparent resin 8 in the cavities 6 goes upward smoothly on the inclined surfaces and flows into the adjacent concave slots 3 and is filled therein. By repetition of such actions, as shown in Fig. 10D, the transparent resin 8 is filled into the concave slots 3 all over the cladding substrate 2 and the core 4 is formed, and the transparent resin 8 is made effective by radiation of ultraviolet ray, and the whole wafer is cut into individual pieces, and thereby respective optical wave guides 1 are obtained.

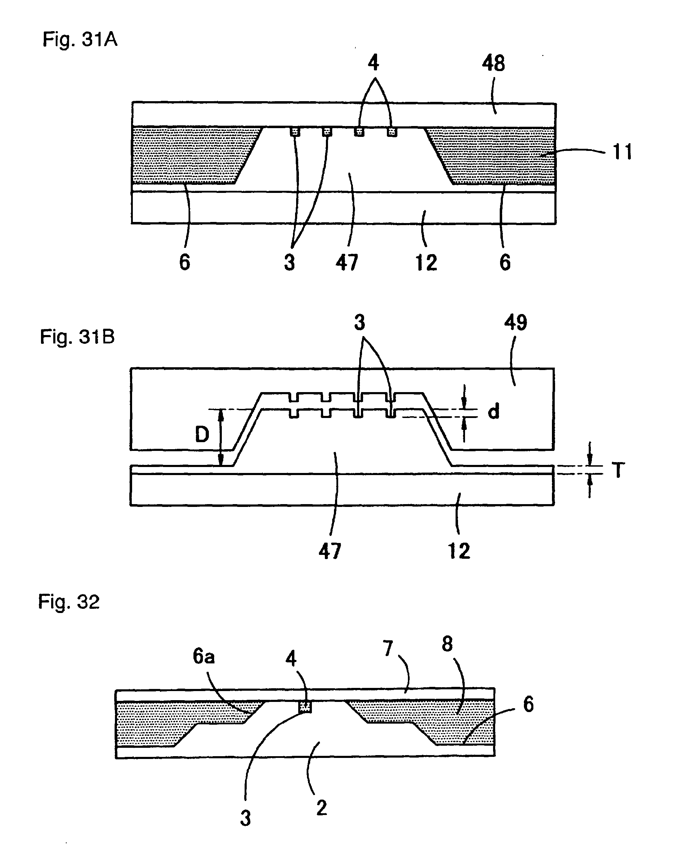

Further, if the side wall surfaces 6a of the cavities 6 are inclined upward and outward diagonally, in forming the cladding substrate 2 by stamper method or the like, it is possible to make the releasing property of stamper preferable, and it is easy to release the cladding substrate 2 from the stamper. (refer to Fig. 31B.) When the releasing property of the stamper is increased preferably, not only it becomes easy to form the cladding substrate 2, but also it is eliminated to scratch the cladding substrate 2 by the edge of the stamper and to cause damage on the surface of the cladding substrate 2, and it is possible to eliminate attachment of scratch or dust and to improve the yield of optical wave guides. And further, in expanding the transparent resin 8, it is possible to prevent air bubbles from being caught in corners of the cavities 6.

Moreover, if the side wall surfaces 6a of the cavities 6 are inclined, it becomes possible to make resin deformation uniform in forming the cladding substrate 2, and it is possible to control stress occurring in the cladding substrate 2. As a result, the optical characteristics of the inside of the cladding substrate 2 become uniform, accordingly it is possible to improve temperature characteristics that are weak points of polymer wave guide, and increase the reliability of optical wave guides. And further, since stress of the cladding substrate 2 is under control, it is possible to prevent cracks from occurring on the cladding substrate 2, and also to restrain deformation at forming.

As a consequence, by making the side wall surfaces 6a of the cavities 6 as mentioned above, the transparent resin 8 can be expanded smoothly over the whole surface of the cladding substrate 2, and it is possible to produce optical wave guides 1 with preferable quality at preferable yield.

With regard to the inclination of the side wall surfaces 6a of the cavities 6, the inclination to a normal line on the cladding substrate 2 may be 7 degree or higher. So as to increase the releasing property of the stamper, the inclination may be set 30 degrees or higher, however, when the inclination of the side wall surfaces 6a of the cavities 6 are set too large, the cladding substrate 2 has to become of a large area, therefore, it is assumed that the range from 10 degrees to 15 degrees is most suitable. And the inclined side wall surfaces 6a of the cavities 6 are not limited to flat surfaces, but may be curved surfaces too.

Herein, the effects of inclination of the side wall surfaces 6a of the cavities 6 in the case wherein the cavities 6 are independent respectively, while, as is clear from the above reason, even in the case wherein adjacent cavities 6 are connected to each other as shown in Fig. 6 and Fig. 7, by making the side wall surfaces 6a of the cavities 6 inclined, the effect to make the transparent resin 8 flow smoothly from the cavities 6 into the concave slot 3 may be attained.

By the way, in the above preferred embodiment, the transparent resin 8 on the flat portions 5 was made thin by pressurizing the transparent resin 8 by the stamper 13, while, by use of a formed upper cladding portion 7, or a substrate wherein an upper cladding layer is formed on its under surface, the transparent resin 8 may be pressed thin. According to such a method, the stamper 13 becomes unnecessary, it is possible to decrease the number of processes. And, in the above preferred embodiment, the ultraviolet ray hardening type transparent resins 8 and 11 and the cladding resin 14 are employed, while in the place of the above resins, a thermal hardening type resin may be employed too. And, the process for forming the cladding substrate 2 is not limited to the reproduction method using the stamper 9, but the cladding substrate 2 may be also formed by means of thermal press or etching. And, as for the transparent resin 8 for core and the transparent resin 11 for cladding, and cladding resin 14, PMMA (polymethyl methacrylate), photo-PCB (photo-curable polychlorobiphenyl), alicyclic epoxy resins, photo-cationic polymerization initiators, acrylate-type resins (containing Si, F), photo-radical polymerization initiators, fluorinated polyimide, and so forth may be employed. (The materials are not limited to photo hardening type. And, as for the transparent resin 8 for core, it is necessary to use resin having a larger refractive index than those of the transparent resin 11 for cladding and the resin 14 for cladding.)

And, by forming the stamper 13 of a soft material, it is possible to press the surface of the cladding substrate 2 uniform even if there are a bit warp, bending, concave or convex thereon.

And, without arranging the upper cladding portion 7 at final stage, optical wave guides in status where only the stamper 13 is released may be made as final products of optical wave guides. In this case, air functions as a cladding layer.

Second Embodiment

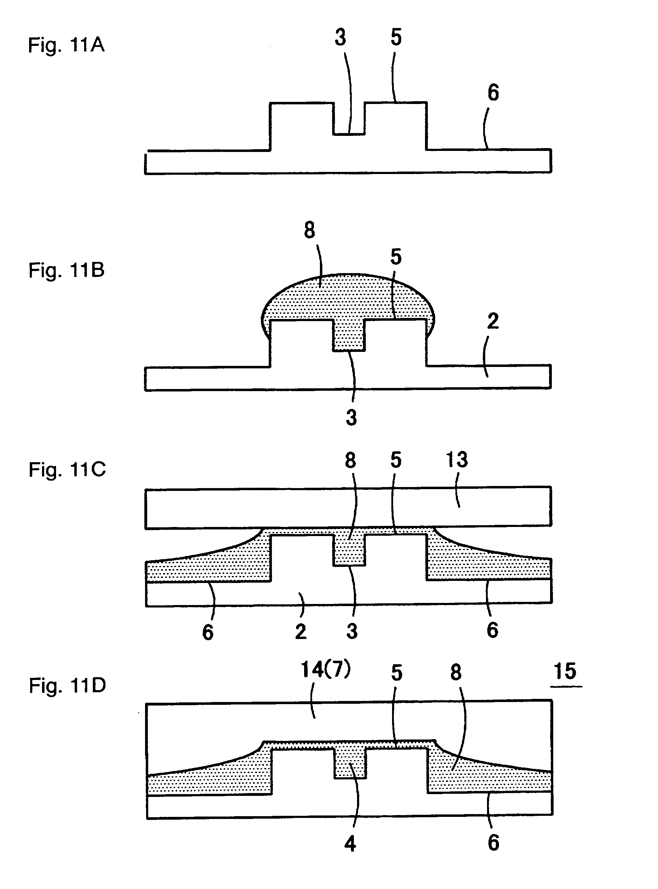

Figs. 11A, 11B, 11C, and 11D show cross sectional views for explaining a method for producing an optical wave guide 15 according to another preferred embodiment under the present invention. In this preferred embodiment, after the cladding substrate 2 having concave slot 3, flat portions 5, and cavity 6 is produced by, for example, the process shown in Fig. 3 (Fig. 11A), an ultraviolet ray hardening type transparent resin 8 is dropped onto this cladding substrate 2 (Fig. 11B). Thereafter, the transparent resin 8 on the cladding substrate 2 is pressed by the stamper 13, and thereby the transparent resin 8 is filled into the concave slots 3 and the transparent resin 8 on the flat portions 5 is expanded thin, and excessive transparent resin 8 is fleed to the cavities 6 (Fig. 11C). A specific pressure is imposed for making the film thickness of the transparent resin 8 between the flat portions 5 and the stamper 13 into a desired film thickness, and after a specific time, ultraviolet ray is radiated from the back surface side of the cladding substrate 2 onto the transparent resin 8, and thereby the transparent resin 8 is hardened. After the transparent resin 8 hardens, the stamper 13 is released, and an ultraviolet ray hardening type cladding resin 14 is applied onto the transparent resin 8, and ultraviolet ray is radiated for hardening. (Fig. 11D).

By the way, in this case too, so as to prevent air bubbles from being caught in, the transparent resin 8 is raised on the cladding substrate 2 as shown in Fig. 11B, on the other hand, the same transparent resin may be attached onto the under surface of the stamper 13 to hang down there. (Refer to Fig. 5.) And after pressing by the stamper 13, the stamper may be moved horizontally.

Third Embodiment

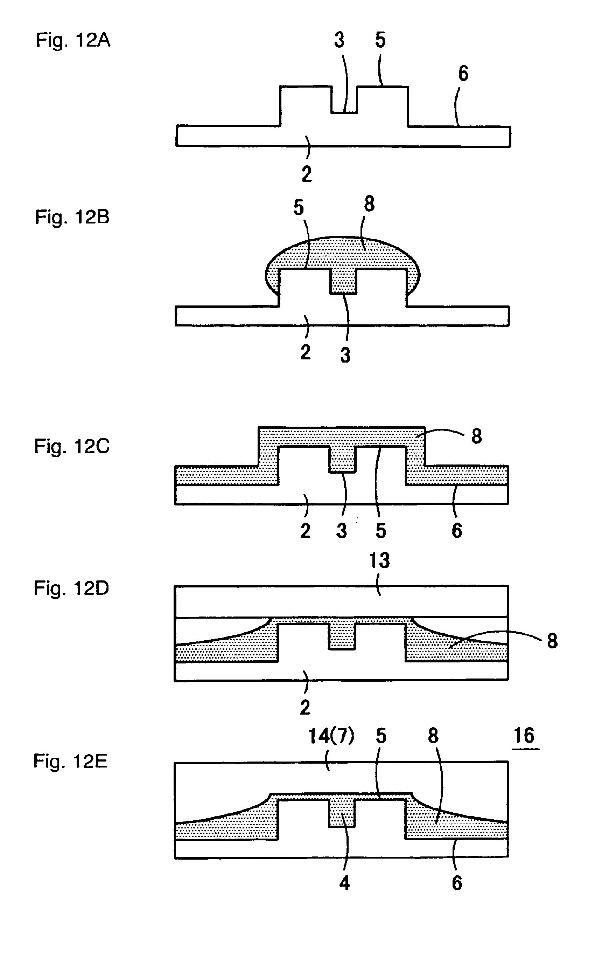

Figs. 12A, 12B, 12C, 12D, and 12E show cross sectional views for explaining a method for producing an optical wave guide 16 according to further another preferred embodiment under the present invention. In this preferred embodiment, after the cladding substrate 2 having concave slot 3, flat portions 5, and cavity 6 is produced by, for example, the process shown in Fig. 3 (Fig. 12A), an ultraviolet ray hardening type transparent resin 8 is dropped onto this cladding substrate 2 (Fig. 12B). Thereafter, the transparent resin 8 is extended over the cladding substrate 2 by spin coating the cladding substrate 2 in light matter or spraying air onto the transparent resin 8 (Fig. 12C). Thereafter, the transparent resin 8 on the cladding substrate 2 is pressed by the stamper 13, and thereby the transparent resin 8 is filled into the concave slots 3 and the transparent resin 8 on the flat portions 5 is expanded thin, and excessive transparent resin 8 is fleed to the cavities 6 (Fig. 12D). By expanding the transparent resin 8 by means of spin coating or air blowing, space is made in the cavities 6, therefore, when the transparent resin 8 is pressurized by the stamper 13, the transparent resin 8 on the flat portions 5 may easily move to the area with space (cavities 6), therefore, it is possible to make the film thickness of the transparent resin 8 on the flat portions 5 thin swiftly. By the way, if the depth of the cavities 6 is formed sufficiently deep, it is more effective. Thereafter, a specific pressure is imposed for making the film thickness of the transparent resin 8 between the flat portions 5 and the stamper 13 into a desired film thickness, and after a specific time, ultraviolet ray is radiated from the back surface side of the cladding substrate 2 onto the transparent resin 8, and thereby the transparent resin 8 is hardened. After the transparent resin 8 hardens, the stamper 13 is released, and an ultraviolet ray hardening type cladding resin 14 is applied onto the transparent resin 8, and ultraviolet ray is radiated for hardening. (Fig. 12E). Fourth Embodiment

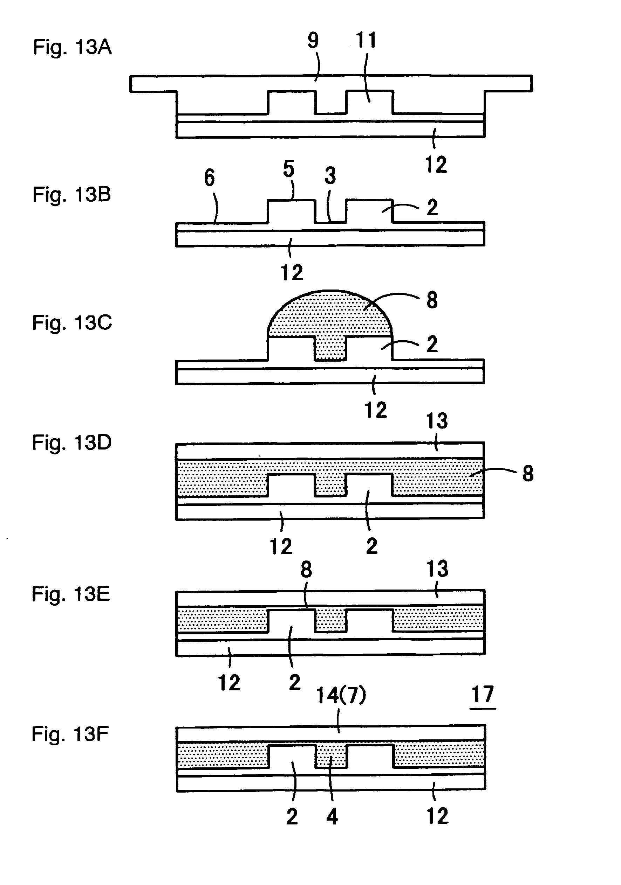

Figs. 13A, 13B, 13C, 13D, 13E, and 13F show cross sectional views for explaining a method for producing an optical wave guide 17 according to still further another preferred embodiment under the present invention. In this preferred embodiment, the transparent resin 11 dropped onto the glass substrate 12 is pressed by the stamper 9 (Fig. 13A), and ultraviolet ray is radiated onto the transparent resin 11, thereby the cladding substrate 2 is formed on the glass substrate 12 (Fig. 13B). On the upper surface of the cladding substrate 2, the concave slot 3 and the flat portions 5 and the cavities 6 are formed. Thereafter, an ultraviolet ray hardening type transparent resin 8 is dropped onto this cladding substrate 2 (Fig. 13C). Thereafter, the transparent resin 8 on the cladding substrate 2 is pressed by the stamper 13, and thereby the transparent resin 8 is filled into the concave slots 3 and the transparent resin 8 on the flat portions 5 is expanded thin, and excessive transparent resin 8 is fleed to the cavities 6 (Fig. 13D). And thereafter, a specific pressure is imposed for making the film thickness of the transparent resin 8 between the flat portions 5 and the stamper 13 into a desired film thickness, and after a specific time (Fig. 13E), ultraviolet ray is radiated from the back surface side of the cladding substrate 2 onto the transparent resin 8, and thereby the transparent resin 8 is hardened. After the transparent resin 8 hardens, the stamper 13 is released, and an ultraviolet ray hardening type cladding resin 14 is applied onto the transparent resin 8, and ultraviolet ray is radiated for hardening. (Fig. 13F).

As seen in optical wave guides produced in these manners, the cavities 6 are not necessarily arranged in the cladding substrate 2, but they may be arranged out of the cladding substrate 2, for example, on the glass substrate 12 and the like.

Fifth Embodiment

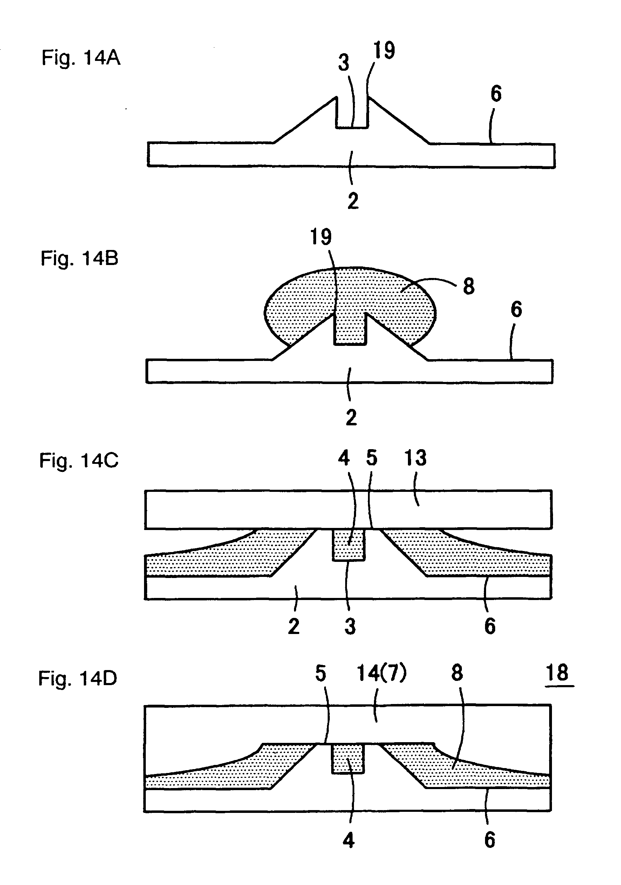

Figs. 14A, 14B, 14C, and 14D show cross sectional views for explaining a method for producing an optical wave guide 18 according to still further another preferred embodiment under the present invention. In this preferred embodiment, in a cladding substrate 2 fresh after production, as shown in Fig. 14A, the portion between the concave slot 3 and the cavity 6 is formed into a triangle whose top end is shaped into a pointed portion 19, and the flat portion 5 is not formed therein. An ultraviolet ray hardening type transparent resin 8 is dropped onto this cladding substrate 2 (Fig. 14B), thereafter, the transparent resin 8 on the cladding substrate 2 is pressed by the stamper 13, and thereby the transparent resin 8 is filled into the concave slots 3. At the same time, by pressing force of the stamper 13, the pointed portions 19 at both sides of the concave slot 3 are pressed flat, thereby flat portions 5 are formed on both sides of the concave slot 3. And the transparent resin 8 on the flat portions 5 is expanded thin, while excessive transparent resin 8 is fleed to the cavities 6 (Fig. 14C). Thereafter, ultraviolet ray is radiated from the back surface side of the cladding substrate 2 onto the transparent resin 8, and thereby the transparent resin 8 is hardened. After the transparent resin 8 hardens, the stamper 13 is released, and an ultraviolet ray hardening type cladding resin 14 is applied onto the transparent resin 8, and ultraviolet ray is radiated for hardening. (Fig. 14D).

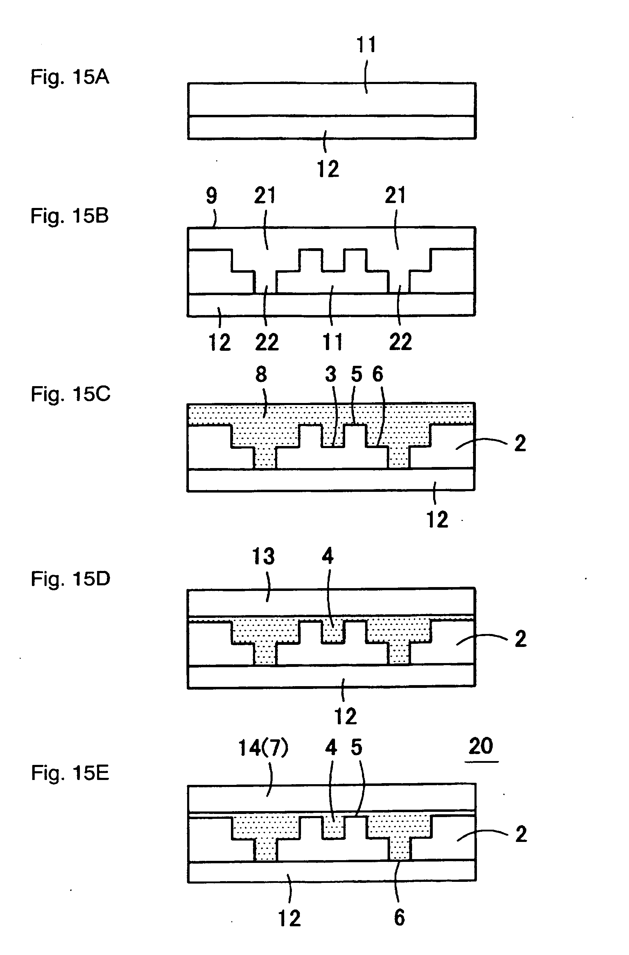

Figs. 15A, 15B, 15C, 15D, and 15E show cross sectional views for explaining a method for producing an optical wave guide 20 according to still further another preferred embodiment under the present invention. In this preferred embodiment, after an ultraviolet ray hardening type transparent resin 11 is applied onto the glass substrate 12 (Fig. 15A), and the transparent resin 11 is pressed by the stamper 9 to form the glass substrate 12 (Fig. 15B). In the stamper 9 employed herein, a narrow protrusion 22 is arranged at the bottom end of the cavity forming portion 21. Therefore, when the stamper 13 is pressed onto the transparent resin 11, the end of the protrusion 22 goes into the transparent resin 11 and contacts the glass substrate 12, thereby the distance between the stamper 13 and the glass substrate 12 is kept in a specific distance, and it is possible to attain the thickness precision of the glass substrate 12.

When the cladding substrate 2 is formed with precise thickness, ultraviolet ray is radiated via the glass substrate 12 onto the transparent resin 11 and thereby the cladding substrate 2 is hardened, and when the cladding substrate 2 hardens, the stamper 13 is released from the cladding substrate 2. Thereafter, the transparent resin 8 is applied onto the cladding substrate 2 (Fig. 15C), and the transparent resin 8 on the cladding substrate 2 is expanded thin by the stamper 13, and excessive transparent resin 8 is fleed to the cavities 6 (Fig. 15D), and ultraviolet ray is radiated via the glass substrate 12 onto the transparent resin 8, and thereby the transparent resin 8 is hardened. When the core 4 is formed in the concave slot 3 in this manner, the stamper 13 is released from the transparent resin 8, and the cladding resin 14 is applied onto the transparent resin 8 and hardened thereon and thereby the upper cladding portion 7 is formed (Fig. 15E).

According to the optical wave guide 20 produced in the above manner, the thickness precision of the cladding substrate 2 is increased, and the height precision from the surface of the glass substrate 12 to the core 4 is increased, as a result, positioning with an optical fiber becomes easy.

Sixth Embodiment

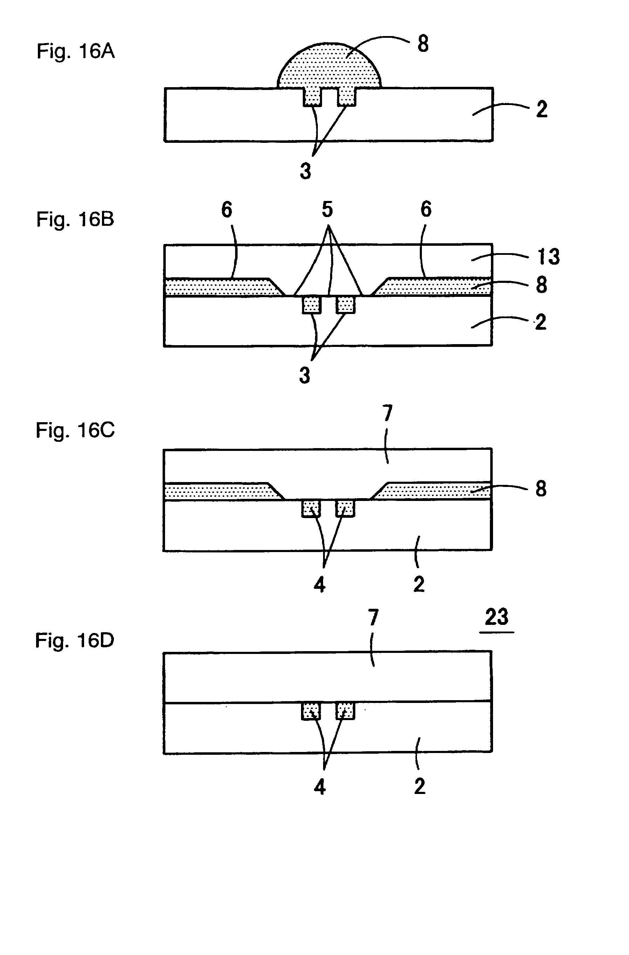

Figs. 16A, 16B, 16C, and 16D show cross sectional views for explaining a method for producing an optical wave guide 23 according to still further another preferred embodiment under the present invention. In this preferred embodiment, cavities 6 are arranged on the stamper 13. Namely, in the cladding substrate 2 to be employed in this preferred embodiment, as shown in Fig. 16A, only the concave slots 3 and the flat portions 5 are arranged, while cavity 6 is not arranged. An ultraviolet ray hardening type transparent resin 8 is dropped onto this cladding substrate 2, thereafter the transparent resin 8 is pressed by the stamper 13 (Fig. 16B). On the under surface of the stamper 13, cavities 6 are arranged at the positions displaced a specific distance from the concave slot 3 of the cladding substrate 2. Accordingly, in such a structure of optical wave guide as this one, only the areas pinched by the area corresponding to the cavities 6 and the area between the concave slots 3 are flat portions 5. Even with such a structure, when forming a core 4, excessive transparent resin 8 on the flat portions 5 can flee to the cavities 6 of the stamper 13, therefore it is possible to make the transparent resin 8 at the flat portions 5 thin swiftly.

Ultraviolet ray is radiated from the back surface side of the cladding substrate 2 onto the transparent resin 8, and thereby the transparent resin 8 is hardened, thereafter, the stamper 13 is released from the transparent resin 8, and thereby the upper cladding portion 7 is formed on the transparent resin 8. At this moment, if the transparent resin 8 in the cavities 6 does not released together with the stamper 13 and remains on the cladding substrate 2, the structure of the optical wave guide 23 becomes as shown in Fig. 16C. And if the transparent resin 8 in the cavities 6 releases together with the stamper 13, then the structure of the optical wave guide 23 becomes as shown in Fig. 16D.

By the way, not illustrated herein, it is also possible to cavities 6 on both the cladding substrate 2 and the stamper 13. And in this preferred embodiment, an optical wave guide having plural cores 4 has been shown, however, one core 4 may be employed in the place of plural ones. And in optical wave guides according to other preferred embodiments herein, it is possible to arrange plural cores 4.

Seventh - Tenth Embodiments

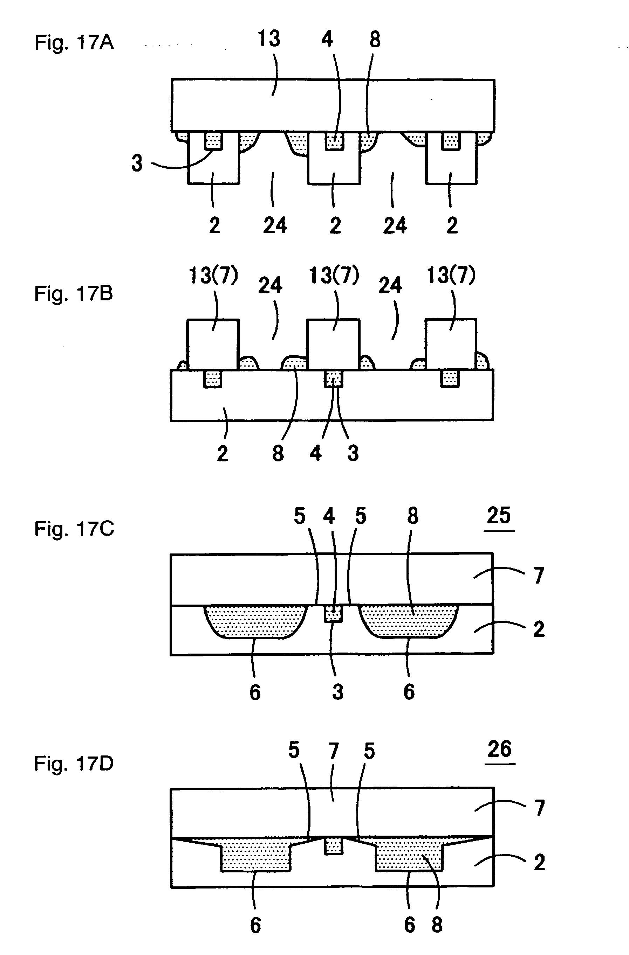

Figs. 17A, 17B, 17C, and 17D show cross sectional views of other structures of optical wave guides. In the preferred embodiment shown in Fig. 17A, plural cladding substrates 2 are arranged, and a space 24 for letting the transparent resin 8 out is arranged between respective cladding substrates 2. In this preferred embodiment, after the transparent resin 8 is dropped onto each cladding substrate 2, the transparent resin 8 is pressed by the stamper 13 or the formed upper cladding portion 7, and the transparent resin 8 on the flat portions 5 (the upper surface of the cladding substrate 2) flees to the spaces 24, therefore, it is possible to make the transparent resin 8 on the upper surface of the cladding substrates 2 thin in swift manner. By the way, this space 24 may be space between cladding substrates 2 in the case wherein respective cladding substrates 2 are arranged, and in the case where cladding substrate 2 is of a wafer shape, the above space 24 may be formed by an opening made on the set (wafer) of cladding substrates 2.

In the preferred embodiment shown in Fig. 17B, plural stampers 13 or plural formed upper cladding portions 7 are arranged and spaces 24 for letting out the transparent resin 8 are formed between them. In this preferred embodiment, the transparent resin 8 is applied onto the cladding substrate 2, thereafter, the transparent resin 8 is pressed by the stampers 13 or the formed upper cladding portions 7, the transparent resin 8 on the flat portions 5 (the upper surface of the cladding substrate 2) flees to the spaces 24, therefore, it is possible to make the transparent resin 8 on the upper surface of the cladding substrate 2 thin swiftly.

While, in an optical wave guide 25 shown in Fig. 17C, cavities 6 are not released to both sides, but are closed. In such a structure as this one, there is no problem only if the transparent resin 8 can be flee to cavities 6 at forming a core 4.

And, in an optical wave guide 26 shown in Fig. 17D, the flat portions 5 of the cladding substrate 2 are tapered, and inclined to the under surface of the upper cladding portion 7. In this way, the flat portions 5 are not necessarily to be parallel with the under surface of the upper cladding portion 7. However, too sharp inclination is not preferable, and the inclination should be enough to keep the film thickness of the transparent resin 8 thin over a certain distance (in the width necessary to prevent light from leaking out). For example, the difference in height at the both sides of the flat portion 5 may be set 3μm or below.

Eleventh Embodiment

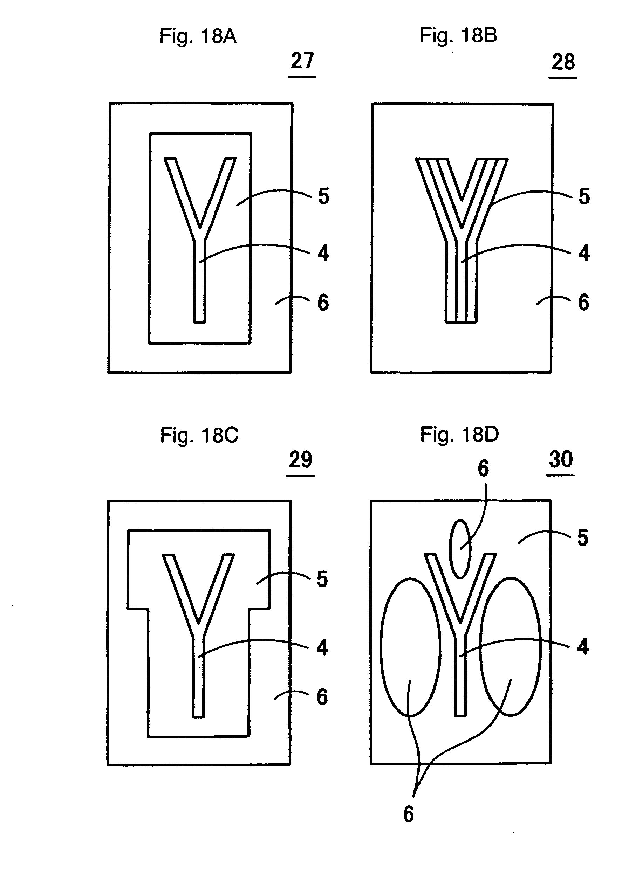

Explanations so far have been made on a single mode optical wave guides, while hereinafter, multi mode optical wave guides are explained. Figs. 18A, 18B, 18C, and 18D show examples of optical wave guides wherein a core 4 is branched and combined. In such multi mode optical wave guides, the width and depth of the core 4 may be set several 10 μm respectively.

First, in the preferred embodiment shown in Figs. 18A, 18B, 18C, and 18D, a Y-shaped core is arranged wherein one core 4 is on one side, while it is branched into two cores 4 on the other side. Among them, in the optical wave guide 27 shown in Fig. 18A, the flat portion 5 is formed so as to be almost the same as the chip shape of the optical wave guide, or to be a shape similar to it, and the cavity 6 is formed around the flat portion 5. While, in the optical wave guide 28 shown in Fig. 18B, the flat portion 5 is formed along the shape of the core 4, and the cavity 6 is formed at the external circumference thereof. And in the optical wave guide 29 shown in Fig. 18C, at the side wherein the core 4 expands, the width of the flat portion 5 is widened in a step shape. In the optical wave guide 30 shown in Fig. 18D, plural cavities 6 are formed in island shapes so as to be adjacent to the core 4, and the other areas than the core 4 and the cavities 6 are made as the flat portion 5. In these optical wave guides 27 - 30, ends of the core 4 are not exposed, but by cutting the ends of the respective optical wave guides 27 - 30 by means of dicing, ends of the core 4 are exposed.

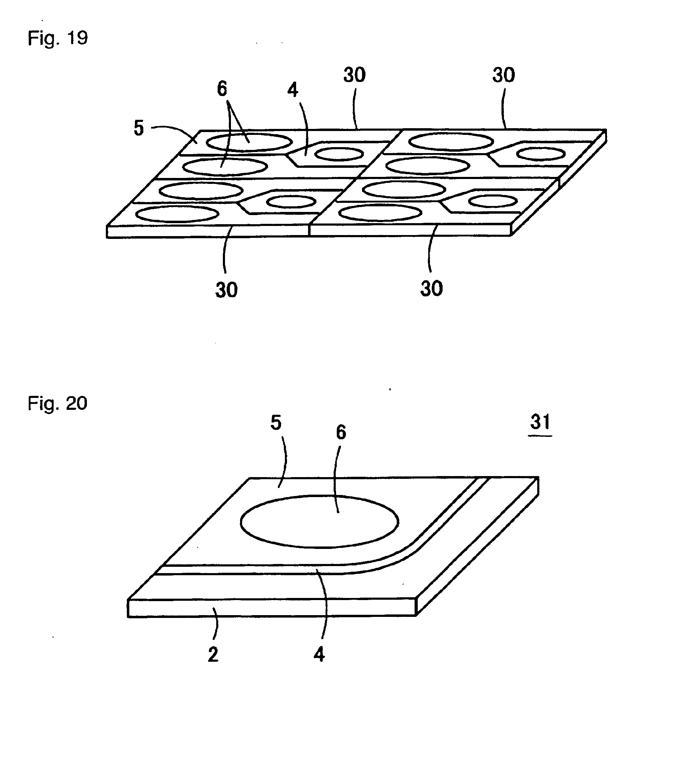

While, as shown in Fig. 19, in the case wherein plural optical wave guides (for example, optical wave guides 30 as shown in Fig. 18D) are formed on a wafer at one time, if the distance between the ends of the core 4 between adjacent optical wave guides is set shorter than the width (blade thickness) of the blade to be used for dicing, when optical wave guides are divided into pieces by means of dicing, it is possible to make ends of the core 4 exposed at one time. Or, as shown in Fig. 18, both ends of the core 4 may be closed in the cladding substrate 2, and the core 4 may be made as optical wave guides without dicing the core 4.

Twelfth Embodiment

Fig. 20 shows an optical wave guide 31 having a core 4 of a curved shape, wherein a cavity 6 of a circular shape or an oval shape is arranged along the curved portion of the core 4, on the cladding substrate 2.

Thirteenth Embodiment

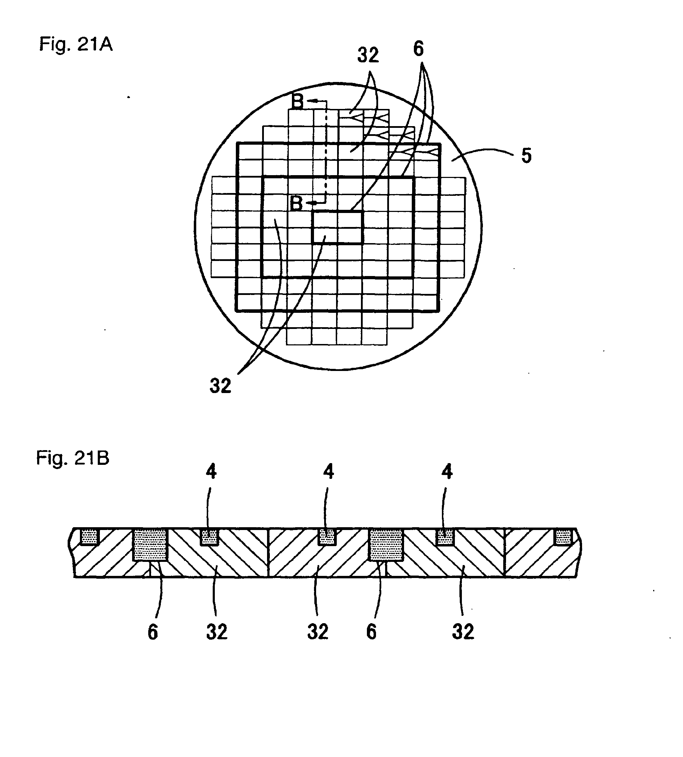

Fig. 21A shows a top view of further another preferred embodiment according to the present invention, while Fig. 21B shows an enlarged cross sectional view along the line B-B of Fig. 21A. This preferred embodiment is for explaining that cavities 6 need not always to be arranged in each unit of optical wave guides 32, and along the borders between the optical wave guides 32, and only at part of borders, cavities 6 are arranged. In such a structure as this one, as shown in Fig. 21B, cavities 6 are positioned at one side adjacent to each core 4, thereby excessive transparent resin 8 may be absorbed.

Fourteenth Embodiment

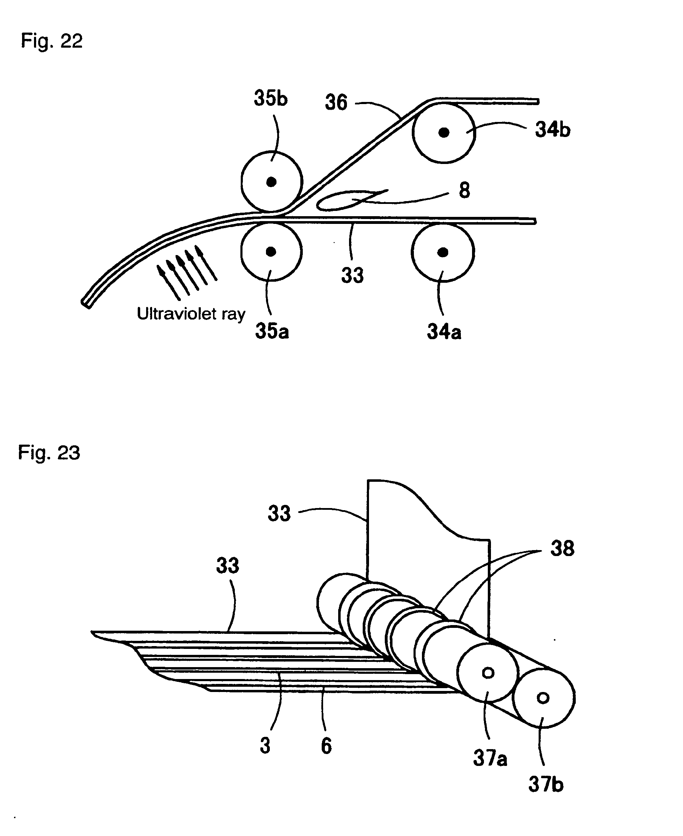

Fig. 22 shows a schematic diagram for explaining a method for producing an optical wave guide according to still another preferred embodiment under the present invention. In this preferred embodiment, cladding substrate 2 and upper cladding portion 7 are structured by use of a film-form material or a sheet material. Lower cladding sheet-form 33 to become cladding substrate 2 passes a roller 34a and is fed inbetween press rollers 35a and 35b, while upper cladding sheet 36 to become upper cladding portion 7 passes a roller 34b and is fed inbetween the press rollers 35a and 35b. The lower cladding sheet 33 and the upper cladding sheet 36 pass in piled status and are supplied inbetween the press rollers 35a and 35b, and just before thereof, transparent resin 8 for core is applied onto the lower cladding sheet 33. And, the lower cladding sheet 33 onto which the transparent resin 8 has been applied and the upper cladding sheet 36 are impressed even pressure by the press rollers 35a and 35b, thereby the transparent resin 8 is pressed and expanded inbetween both the sheets 33 and 36. Thereafter, ultraviolet ray is radiated onto both the sheets 33 and 36 coming out from the press rollers 35a and 35b, the transparent resin 8 is hardened, and thereby optical wave guides are produced in continuous manner. Continuously produced optical wave guides are cut at specific position by use of a cutter or the like. According to such a method described above, it is possible to produce optical wave guides by continuous process and at high speed, and further, by arranging cavities 6 for letting resin out on both the sheets 33 and 36, it is possible to produce optical wave guides of preferable quality.

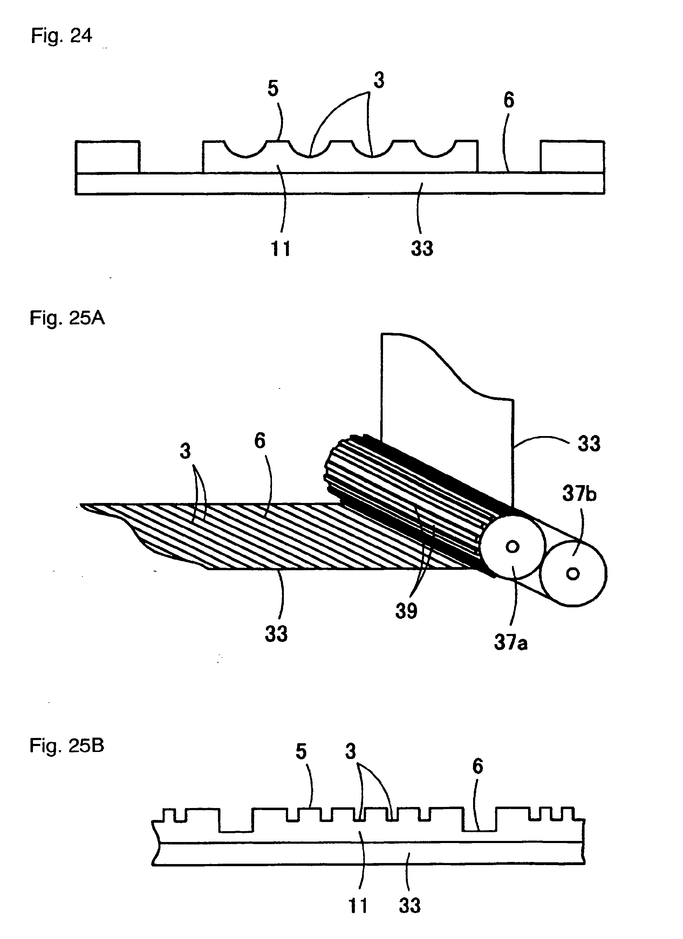

Fig. 23 shows a schematic diagram of a device for arranging concave slots 3 and cavities 6 in the above lower cladding sheet 33 in advance. Among a pair of press rollers 37a and 37b, on the external circumferential surface of the press roller 37a, projections 38 for forming concave slots 3 and cavities 6 on the lower cladding sheet 33 are arranged on the external circumferential surface thereof along the circumferential direction. Therefore, as the lower cladding sheet 33 onto which the transparent resin 11 has been applied passes between the press rolls 37a and 37b, as shown in Fig. 24, concave slots 3 and cavities 6 are continuously formed on the transparent resin 11 on the surface of the lower cladding sheet 33, and then the transparent resin 11 is hardened by ultraviolet ray radiation.

And, in order to form concave slots 3 and cavities 6 in advance in the lower cladding sheet 33, as shown in Fig. 25A, on the external circumferential surface of the press roller 37a, the protrusions 39 for forming concave slots 3 and cavities 6 in the lower cladding sheet 33 may be arranged along the axial direction. In this case, when the lower cladding sheet 33 onto which the transparent resin 11 has been applied passes inbetween the press rollers 37a and 37b, as shown in Fig. 25B, concave slots 3 and cavities 6 are formed with intervals on the transparent resin 11 on the surface of the lower cladding sheet 33, and the transparent resin 11 is hardened by ultraviolet ray radiation.

Fifteenth Embodiment

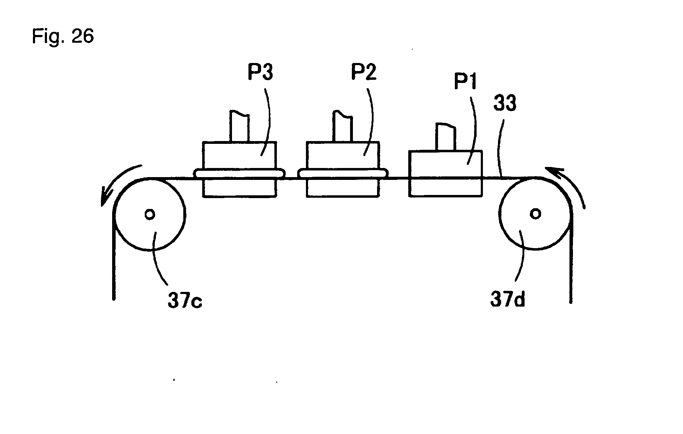

Fig. 26 shows a schematic diagram for explaining a method for producing an optical wave guide according to still further another preferred embodiment under the present invention. In this preferred embodiment, lower cladding sheet 33 onto which the transparent resin 11 has been applied is fed by a pair of rolls 37c and 37d, and at a first press portion P1, a mold is pressed onto the transparent resin 11 and ultraviolet ray is radiated onto the transparent resin 11 and thereby concave slots 3, flat portions 5, cavities 6 and the like are formed and thereby cladding substrate 2 is formed on the lower cladding sheet 33. Thereafter, the transparent resin 8 is supplied onto the cladding substrate 2, then the transparent resin 8 is pressed by the stamper 13 at the core forming portion P2 and ultraviolet ray is radiated thereon and core 4 is formed and at the same time excessive transparent resin 8 is discharged into cavities 6. Thereafter, cladding resin 14 is supplied onto the hardened transparent resin 8, then the cladding resin 14 is pressed at the upper cladding forming portion P3 and ultraviolet ray is radiated thereon and the upper cladding portion 7 is formed. According to this method too, it is possible to continuously produce optical wave guides.

Sixteenth Embodiment

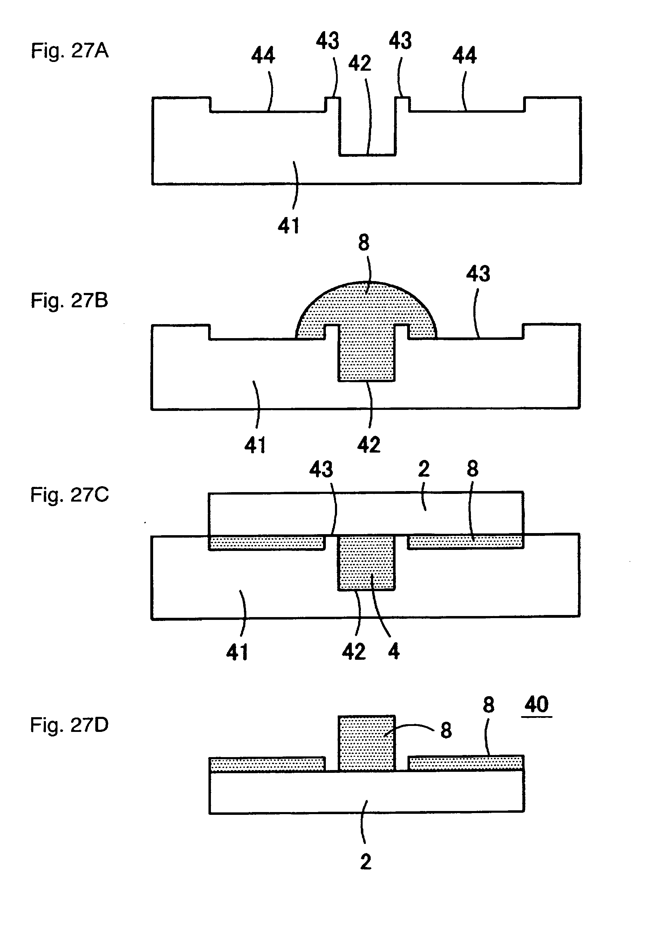

Figs. 27A, 27B, 27C, and 27D show cross sectional views for explaining a method for producing an optical wave guide 40 according to still further another preferred embodiment under the present invention. In this preferred embodiment, a metallic mold 41 is employed, and in the metallic mold 41, as shown in Fig. 27A, a concave slot 42 for forming core 4 is arranged, and flat portions 43 are arranged at both sides thereof, and further cavities 44 are formed at both sides thereof. An ultraviolet ray hardening type transparent resin 8 is dropped onto this metallic mold 41 (Fig. 27B), and the transparent resin 8 is pressed by a formed cladding substrate 2. At this moment, as shown in Fig. 27C, sufficient pressure is imposed onto the cladding substrate 2, and thereby the transparent resin 8 on the flat portions 5 is made sufficiently thin, and excessive transparent resin 8 is fleed to cavities 8. Thereafter, the optical wave guide 40 formed in this manner is released from the metallic mold 41, and the optical wave guide 40 as shown in Fig. 27D is obtained.

In this optical wave guide 40, on the upper surface of the cladding substrate 2 of a flat plane shape, the core 4 formed by the concave slot 42, and the convex portions 45 formed by cavities 44 are exposed, and the upper surface and side surfaces of the core 4 are of air cladding layer. In such an optical wave guide 40 as this one, since the portion between the core 4 and the convex portion 45 is connected only by a sufficiently thin layer of the transparent resin 8, there is no fear of light signal in core 4 leaking out of the convex portion 45, and it is possible to keep signal quality.

Seventeenth - Twentieth Embodiments

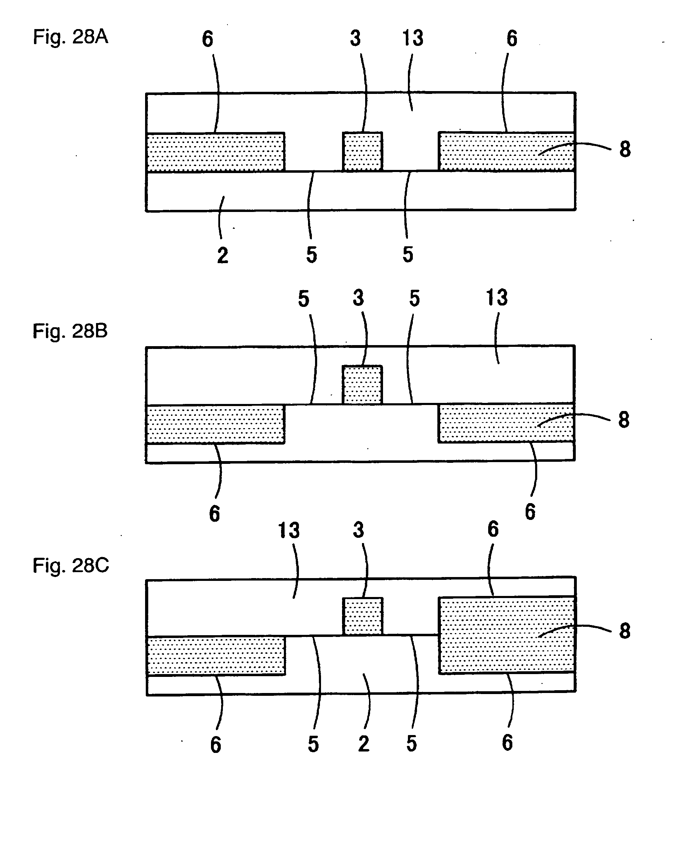

Figs. 28A, 28B, and 28C show cross sectional views for explaining intermediate processes in a method for producing an optical wave guide according to still further another preferred embodiment under the present invention. In the preferred embodiment shown in Fig. 28A, on the under surface of the stamper 13, a concave slot 3 for forming core, cavities 6 for fleeing transparent resin 8, and flat portions 5 for discharging transparent resin 8 and pressing transparent resin 8 sufficiently thin are formed.

And, in the preferred embodiment shown in Fig. 28B, on the under surface of the stamper 13, a concave slot 3 for forming core is arranged, and on the upper surface of cladding substrate 2, cavities 6 for letting transparent resin 8 out are arranged. While, flat portions 5 for discharging transparent resin 8 and pressing transparent resin 8 sufficiently thin are formed on the under surface of the stamper 13 and the upper surface of the cladding substrate 2.

And further, in the preferred embodiment shown in Fig. 28C, concave slot 3 for forming core is arranged on the under surface of the stamper 13, and one cavity 6 is arranged on the upper surface of the cladding substrate 2, and another cavity 6 is arranged inbetween the upper surface of the cladding substrate 2 and the under surface of the stamper 13. And flat portions 5 for discharging transparent resin 8 and pressing transparent resin 8 sufficiently thin are formed on the under surface of the stamper 13 and the upper surface of the cladding substrate 2.

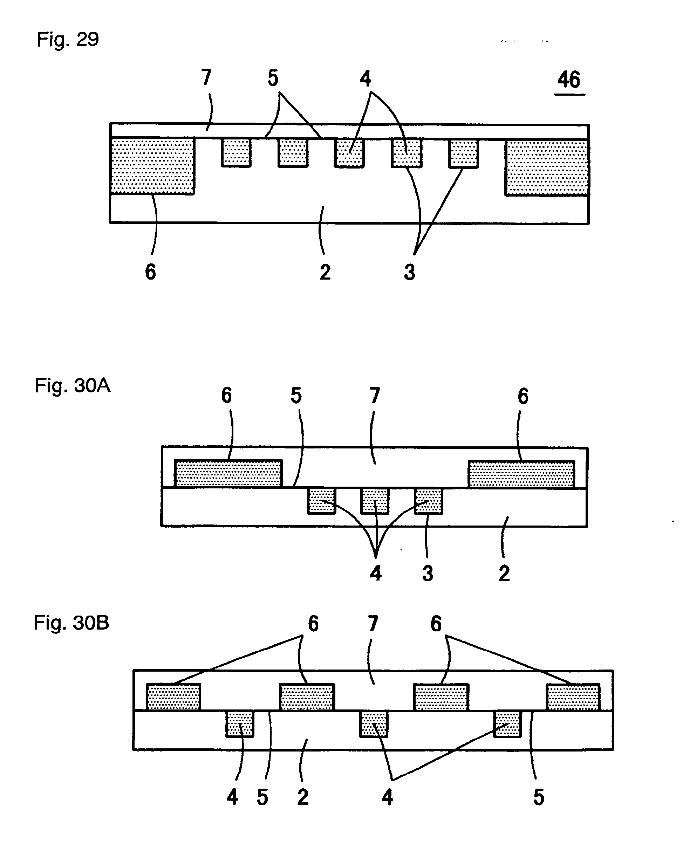

And, Fig. 29 shows a cross sectional view of an optical wave guide 46 according to still another preferred embodiment under the present invention. In this optical wave guide 46, plural cores 4 are formed on the upper surface of the cladding substrate 2, and cavities 6 are arranged at both sides' ends of the cladding substrate 2, and between concave slots 3 or between concave slot 3 and cavity 6, flat portions 5 are formed on the upper surface of the cladding substrate 2. In the case where plural cores 4 are formed like this preferred embodiment, there is no need to arrange one cavity 6 corresponding to each core 4, but only one cavity 6 may be arranged to plural cores 4.

Fig. 30A shows a cross sectional view of an optical wave guide, wherein plural cores 4 are formed on the upper surface of the cladding substrate 2 too, while cavities 6 are arranged on the under surface of the upper cladding portion 7 at the outside of the area of the cores 4. And Fig. 30B also a cross sectional view of an optical wave guide, wherein plural cores 4 are formed on the upper surface of the cladding substrate 2, while, cavities 6 are arranged on the under surface of the upper cladding portion 7 so as to be positioned at the center between the core 4 and the core 4.

Twenty-first Embodiment

Fig. 31A shows a cross sectional view of an optical wave guide according to another preferred embodiment under the present invention. In the preferred embodiment shown in Fig. 31A, a lower cladding portion 47 having plural concave slots 3 for forming cores is formed on a glass substrate 12, and into the concave slots 3, transparent resin 11 for forming cores is filled and thereby cores 4 are formed. And at both sides of the concave slots 3, cavities 6 deeper than the depth of the concave slots 3 are formed, where transparent resin 11 overflowing from the concave slots 3 collects. On the upper surface of the lower cladding portion, an upper cladding portion 48 is laminated.

And Fig. 31B shows a schematic diagram of part of the production process for the above-mentioned lower cladding portion 47, wherein an ultraviolet ray hardening type cladding resin is dropped onto the glass substrate 12, and the cladding resin is pressed by the stamper 47 thereby the lower cladding portion 47 is formed, and ultraviolet ray is radiated onto the lower cladding portion 47 and the lower cladding portion 47 is hardened, thereafter as shown in Fig. 31B, the stamper 49 is released from the lower cladding portion 47, thereby the lower cladding portion 47 is formed on the glass substrate 12.

In the optical wave guide according to the present invention, core material is filled into concave slots 3, and the core material is pressed by the mold surface of stamper or a formed lower cladding portion 47 and thereby cores 4 are formed in concave slots 3, therefore, so as to make thin the thickness of transparent resin layer remaining inbetween the upper surface of the lower cladding portion 47 and the upper cladding portion 48, and making a uniform thickness and prevent light from leaking out from cores 4, it is necessary for the interface of the lower cladding portion 47 to be formed horizontally in precise manner. Since the lower cladding portion 47 is formed as shown in Fig. 31B, so as to form the interface of the lower cladding portion 47 horizontally, it is required to hold the stamper horizontally and press it onto cladding resin.

However, if the thickness of the lower cladding portion 47 at the bottom surface of cavities 6 (the thickness of the lower cladding portion 47 between the bottom surface of the cavities 6 and the upper surface of the glass substrate 12) is thick, when pressing the cladding resin by the stamper 49, pressing force becomes uneven and the stamper 49 is likely to incline, as a result, it is difficult to make the interface of the lower cladding portion 47 horizontal.

Accordingly, in this preferred embodiment, the thickness T of the lower cladding portion 47 at the bottom surface of the cavities 6 is made extremely thin. It is preferred to make this thickness as thin as possible (i.e., 0 $\mu$m), and in concrete, this thickness T may be 7$\mu$m or below, preferably 5$\mu$m or below. In order to make the thickness of the lower cladding portion 47 at the bottom surface of the cavities 6 extremely thin, the stamper 49 should be pressed so strongly that it almost contacts the surface of the glass substrate 12 at forming the lower cladding portion 47, therefore, the stamper 49 should be pressed horizontally, as a result, the height of other portions than the cavities 6 on the lower cladding portion 47 (area wherein concave slots 3 are formed), and the surface of the lower cladding portion 47 becomes a flat and horizontal surface. And in order to make thin the thickness of the lower cladding portion 47 at the bottom surface of the cavities 6, it is effective to devise the shape of the stamper 49 (for example, depth of escape slot).

Thereby, the surface of the lower cladding portion 47 is finished flat and horizontal, and when cores 4 are filled into concave slots 3, the surface of the cores 4 is pressed horizontally, it is possible to decrease light leakage from the cores 4. Further, the unevenness of cores 4 in vertical direction is decreased, consequently, combination loss when to combine fiber array or the like to end surfaces of cores 4 is reduced.

On the other hand, when the thickness of the lower cladding portion 47 at the bottom surface of the cavities 6 is made extremely thin, if the depth of the cavities 6 is equal to the depth d of the concave slots 3, the thickness of the lower cladding portion 47 at the bottom surface of the concave slots 3 becomes extremely thin, there is a fear that light transmitting through the cores 4 may penetrate into the lower cladding portion 47 from the bottom surface of the cores 4 and leak to the glass substrate 12.

Accordingly, in this preferred embodiment according to the present invention, the depth D of the cavities 6 is set to become extremely deep compared with the depth d of the concave slots 3. In concrete, to the depth of the concave slots 3 being around 6$\mu$m, the depth D of the cavities 6 may be 10$\mu$m or more, preferably 15$\mu$m or more, more preferably 20 $\mu$m or more. As a consequence, even when the thickness of the lower cladding portion 47 at the bottom surface of the cavities 6 is made thin, it is possible to avoid the thickness of the lower cladding portion 47 at the bottom surface of the concave slots 3, and it is available to minimize leakage of light transmitting through the cores 4.

Twenty-second Embodiment

Fig. 32 shows a cross sectional view of a structure of an optical wave guide according to another preferred embodiment under the present invention. In this optical wave guide, side wall surfaces 6a of the cavities 6 arranged on the cladding substrate 2 are formed in a step shape. The side wall surfaces 6a may also be vertical surfaces, and may be inclined surfaces as illustrated therein, and the number of steps and the width of the step portion (landing portion) in the side wall surfaces 6a may be optional.

Applied Embodiment 1

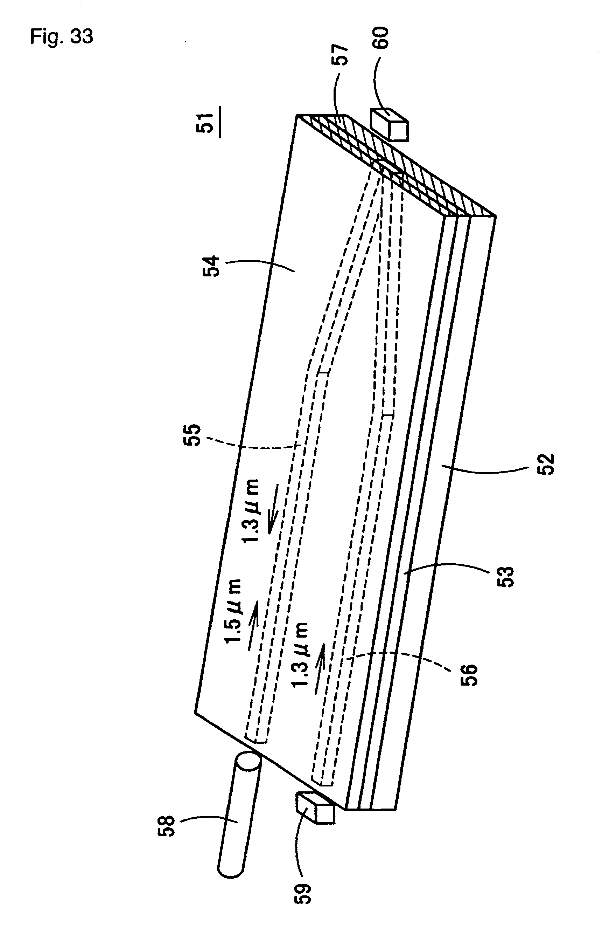

In the next place, applied embodiments of optical wave guides according to the present invention are explained hereafter. Fig. 33 shows a perspective view of an optical transceiver 51. In this optical transceiver 51, a lower cladding portion 53 (cladding substrate 2) is laminated onto the substrate 52, and an upper cladding portion 54 (upper cladding portion 7) is laminated onto the lower cladding portion 53, and 2 cores 55 and 56 are embedded in V shape on the lower cladding portion 53, and the end surfaces of the cores 55 and 56 are arranged apart at one end surface, while the cores 55 and 56 are combined at the other end surface, and a wavelength filter 57 is attached to the above other end surface.

In the service status of this optical transceiver 51, an optical fiber 58 is connected to the exposed end surface of the core 55 at one end surface, while a light emitting element 59 such as a semiconductor laser or the like is arranged at the exposed end surface of the core 56 at one end surface, and a light receiving element 60 such as a photo diode or the like is arranged at the position corresponding to the cores 55 and 56 at the other end surface. The above wavelength filter 57 has characteristics, for example, to let light of wavelength 1.5$\mu$m penetrate and reflect light of wavelength 1.3$\mu$m.

Accordingly, when a light signal of wavelength 1.5$\mu$m is transmitted from the optical fiber 58, this light signal goes via the end surface of the core 55 into the core 55, and is transmitted through the core 55 and reaches the other end of the core 55. The light signal of wavelength 1.5$\mu$m that has reached the end surface of the core 55 penetrates through the wavelength filter 57, and is received by the light receiving element 60.

And, when a light signal of wavelength 1.3$\mu$m is output from the light emitting element 59, this light signal goes via the end surface of the core 56 into the core 56, and is transmitted through the core 56 and reaches the other end of the core 56. The light signal of wavelength 1.3$\mu$m that has reached the end surface of the core 56 is reflected by the wavelength filter 57, and then the light signal reflected by the wavelength filter 57 is transmitted through the core 55 and reaches the end surface at the side where the optical fiber is connected, therein the light signal goes out from the end surface of the core 55 and goes into the optical fiber 58, and then is sent through the optical fiber 58.

This optical transceiver 51, employing an optical wave guide according to the present invention, enables to restricts light from leaking from core, and to minimize the deterioration of signal quality. And since it may be produced by reproduction method and the like, its productivity is preferable.

Applied Embodiment 2

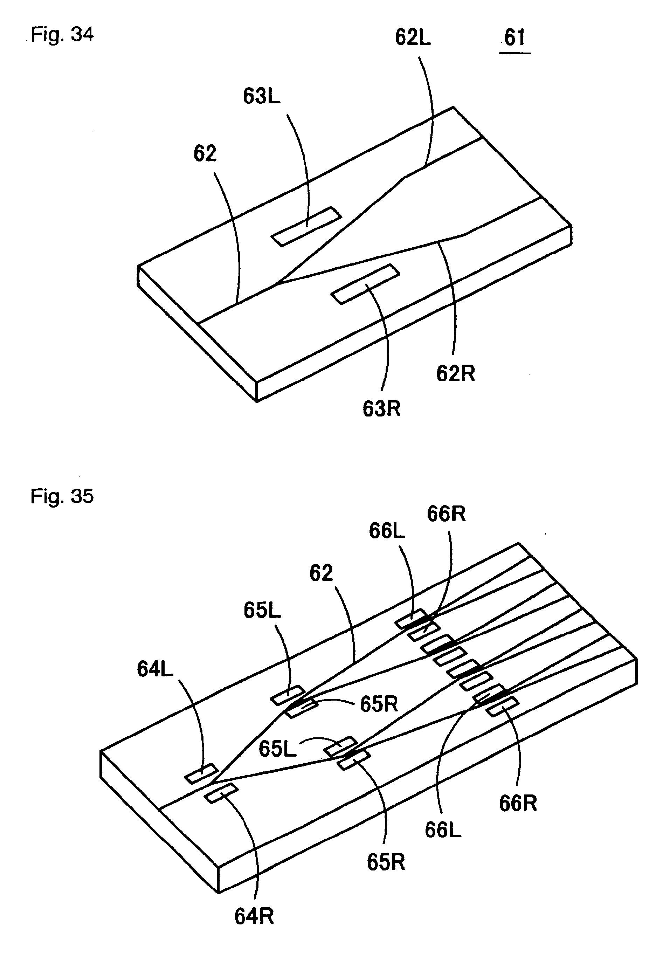

Fig. 34 shows a schematic perspective view of a structure of an optical switch 61 according to the present invention. In this optical switch 61, a core 62 branched into Y shape is arranged, and heaters 63R and 63L are arranged at both sides of the branch portion of the core 62. Since the core 62 shuts out a light signal when heat is imposed thereon, for example, when electricity is supplied only to the heater 63R to get it hot, a light signal is transmitted through the core 62L at the opposite side of the heater 63R and output. While, when electricity is supplied only to the heater 63L to get it hot, a light signal is transmitted through the core 62R at the opposite side of the heater 63L and output. Accordingly, in this optical switch 61, by controlling ON/OFF of the heaters 63R and 63L, it is possible to switch output destinations of a light signal.

And, by repeating such a structure as shown in Fig. 34 in plural steps, it is possible to switch a light signal to further more output destinations. For example, as shown in Fig. 35, by repeating such a branching structure as shown in Fig. 34 in 3 steps, and arranging heaters 64R and 64L, heaters 65R and 65L, and heaters 66R and 66L, it is possible to switch the output destinations of a light signal into 8 directions according to control of each heater.

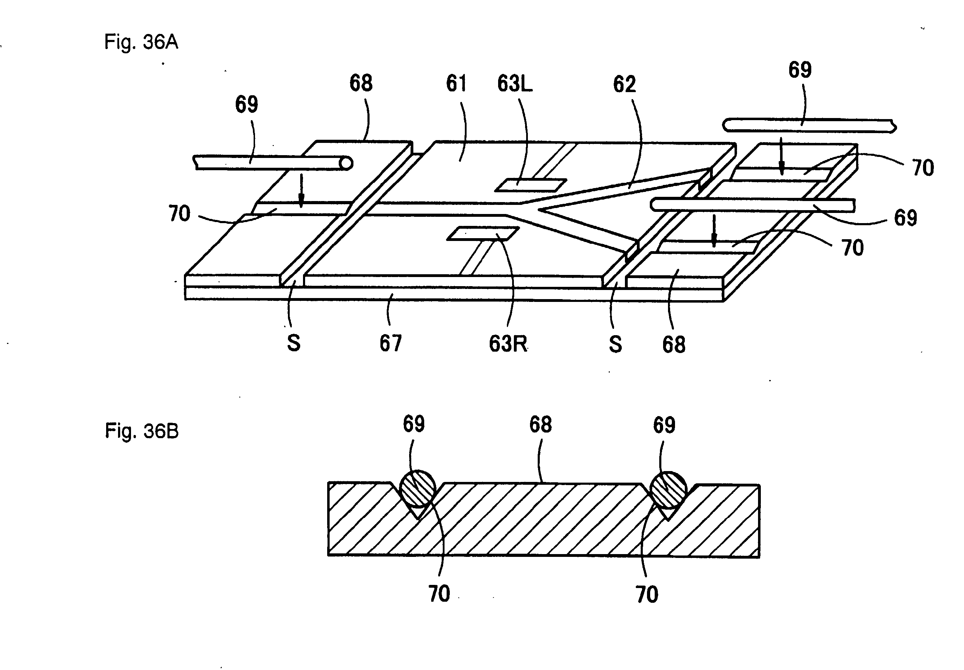

Fig. 36 shows a perspective view of a concrete structure of an optical switch as shown in Fig. 34. This optical switch 61 is attached to the top central portion of a base 67, and on both sides of the base 67, fiber supporting plates 68 are fixed so as to face both end surfaces of the optical switch 61. On the upper surfaces of the fiber supporting plates 68, V-shaped fiber fixing portions 70 for centering and positioning the optical fiber 69 are arranged, and the optical fiber 69 is pressed into the fiber fixing portions 70 and fixed by means of adhesive, thereby core end surfaces of the optical switch 61 and optical axes of the optical fiber 69 are engaged with each other. By the way, the clearances s between the optical switch 61 and the fiber supporting plates 68 are to prevent adhesive for fixing the optical fiber 69 from attaching to the optical switch 61.

By the way, to the optical switch explained above, an optical fiber array may be connected in freely attachable and detachable manners by use of a coupler.

Applied Embodiment 3

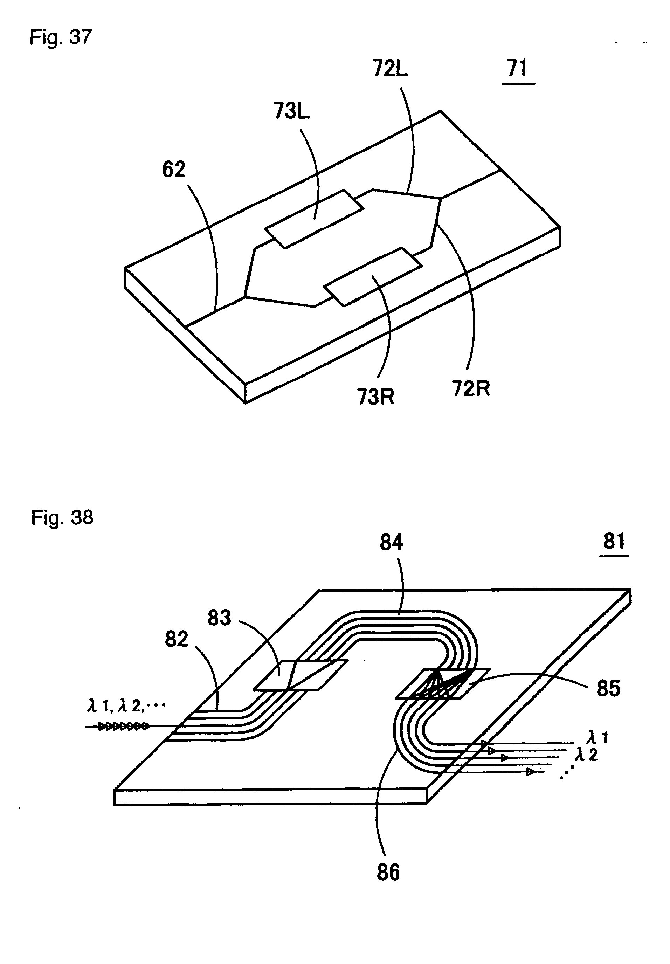

Fig. 37 shows a perspective view of a structure of an optical attenuator 71 according to the present invention. In this optical attenuator 71, the halfway portion of a core 62 is branched, and heaters 73R and 73L are arranged onto respective core branch portions 72R and 72L. In this optical attenuator 71, by impressing the heaters 73R and 73L and generating heat, it is possible to control the phase of light passing the core branch portions 72R and 72L, as a result, by controlling the heaters 73R and 73L, it is possible to attenuate light passing the optical attenuator 71 according to the principle of Mach-Zehnder interferometer.

Applied Embodiment 4

Fig. 38 shows a structure of an AWG optical wave guide circuit 81, wherein to an incident optical wave guide 82 comprising plural cores, an array optical wave guide 84 comprising plural cores is connected via an incident side slab optical wave guide 83, and further to the other end of the array optical wave guide 84, an outgoing optical wave guide 86 comprising plural cores is connected via an outgoing side slab optical wave guide 85.

In this optical wave guide circuit 81, when light beams of wavelengths $\lambda1$, $\lambda2$, $\lambda3$, ... go into the incident optical wave guide 82, light beams of the respective wavelengths $\lambda1$, $\lambda2$, $\lambda3$, ... are separated per light of each of wavelengths $\lambda1$, $\lambda2$, $\lambda3$, ... by functions of the incident side slab optical wave guide 83 and the outgoing side slab optical wave guide 85, and the separated light beams of respective wavelengths $\lambda1$, $\lambda2$, $\lambda3$, ... are output through respective cores that configure the outgoing optical wave guide 86.

Applied Embodiment 5

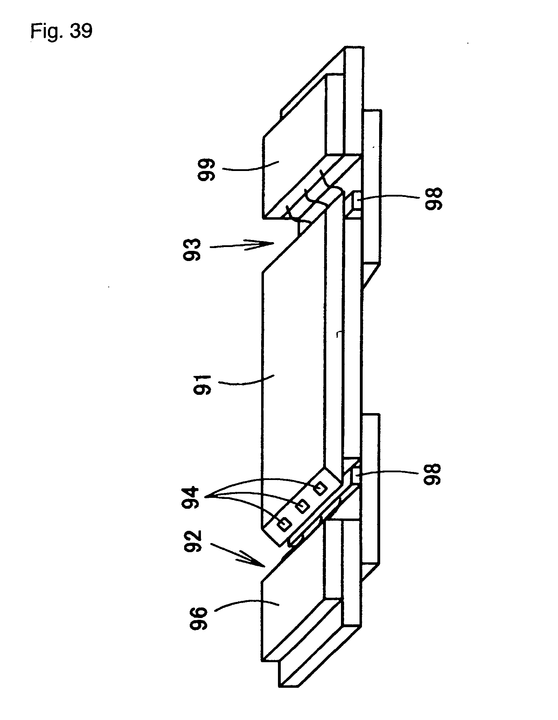

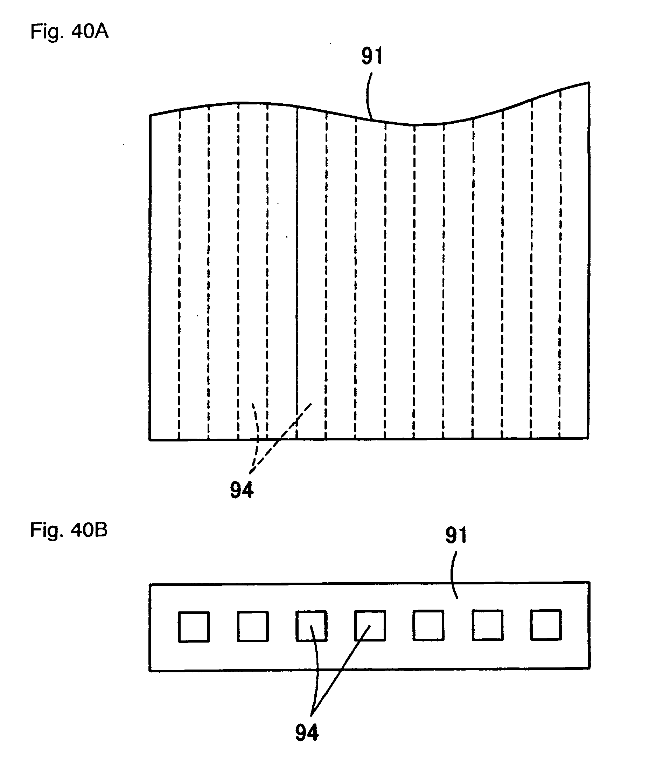

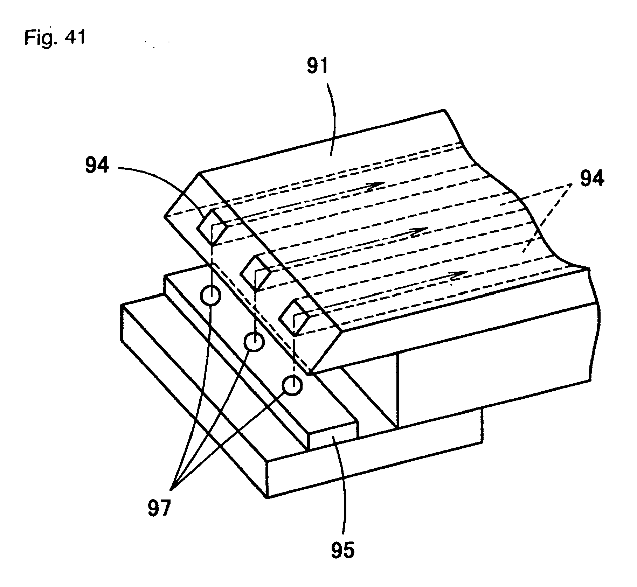

Fig. 39 shows a system for sending signals sent by one optical communication device through optical wave guides and receiving the signals by the other optical communication device. Namely, in this communication system, at both ends of an optical wave guide 91, arranged are optical communication devices 92 and 93. In the optical wave guide 91, as shown in Fig. 40, plural cores are embedded, and both end surfaces are cut at angle 45 degrees upward. The optical communication device 92 is equipped with a control circuit 96 comprising a light emitting portion 95 and an LSI, and on the light emitting portion 95, as shown in Fig. 41, light emitting elements 97 such as light emitting diodes, semiconductor lasers, or the like are arranged at the position just under the end surfaces of respective cores 94. In the same manner, the optical communication device 93 is equipped with a control circuit 99 comprising a light receiving portion 98 and an LSI, and on the light receiving portion 98, light receiving elements (not illustrated) such as photo diodes or the like are arranged at the position just under the end surfaces of respective cores 94.

In such a structure as mentioned above, when the respective light emitting elements 97 are emitted by the control circuit 96, and light signals are output just upward from the respective light emitting elements 97, these light signals, as shown in Fig. 41, go through the under surface of the optical wave guide 91 into the optical wave guide 91, and are totally reflected by the inclined end surfaces of the respective cores 94, and transmitted along the optical axial direction of the cores 94. When the light signals reach at the other ends of the cores 94, the light signals are totally reflected by the inclined end surfaces of the cores 94 and directed downward, and are ejected through the under surface of the optical wave guide 91 toward the respective light receiving elements. The light signals that are ejected downward are received by the respective light receiving elements of the light receiving portion 98, and processed by the control circuit 99 according to specific signal processing.

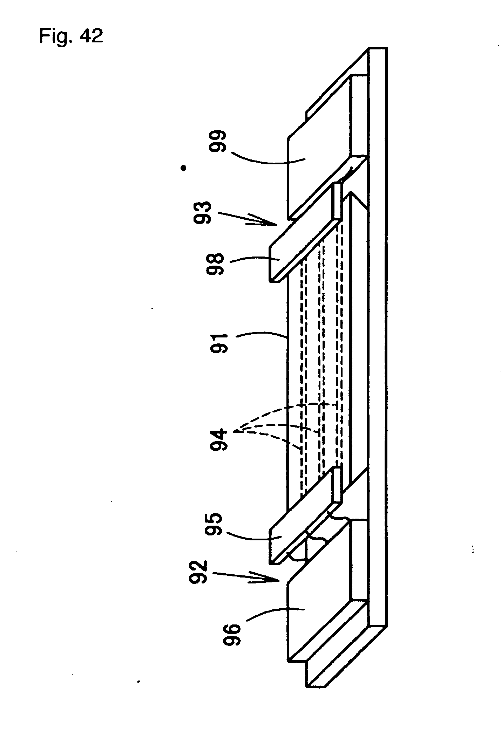

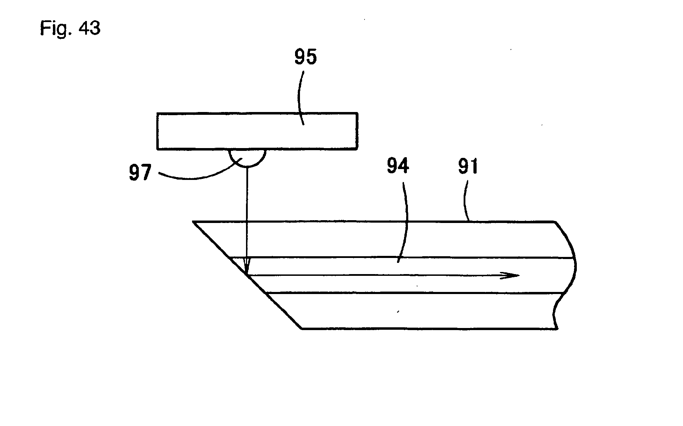

And, Fig. 42 shows another structure of a communication system. In an optical wave guide 91 to be employed in this system, both end surfaces thereof are cut at angle 45 degrees downward. On the light emitting portion 95 of an optical communication device 92, as shown in Fig. 43, light emitting elements 97 such as light emitting diodes, semiconductor lasers, or the like are arranged at the position just above the end surfaces of respective cores 94. In the same manner, on the optical communication device, light receiving elements (not illustrated) such as photo diodes or the like are arranged at the position just above the end surfaces of respective cores 94.

In such a structure as mentioned above too, when the respective light emitting elements 97 are emitted by the control circuit 96, and light signals are output just downward from the respective light emitting elements 97, these light signals, as shown in Fig. 43, go through the under surface of the optical wave guide 91 into the optical wave guide 91, and are totally reflected by the inclined end surfaces of the respective cores 94, and transmitted along the optical axial direction of the cores 94. When the light signals reach at the other ends of the cores 94, the light signals are totally reflected by the inclined end surfaces of the cores 94 and directed upward, and are ejected through the upper surface of the optical wave guide 91 toward the respective light receiving elements. The light signals tat are ejected upward are received by the respective light receiving elements of the light receiving portion 98, and processed by the control circuit 99 according to specific signal processing.

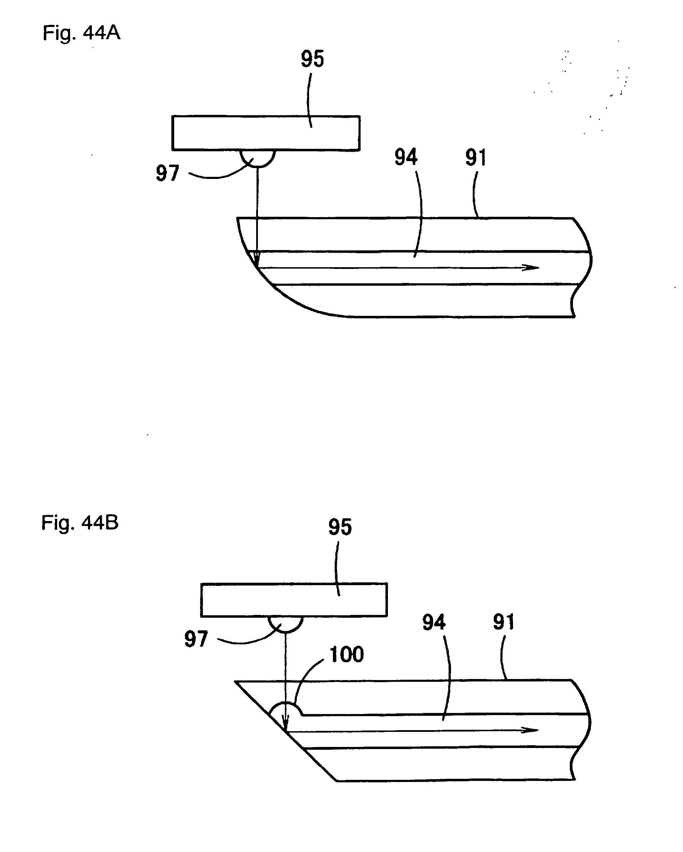

By the way, in the case where the end surface of the optical wave guide 91 is curved in an arc shape or a parabola shape as shown in Fig. 44A, or a lens portion 100 is arranged at the end of core 94 as shown in Fig. 44B, it is possible to have light converging effect, wherein light coming from an light emitting element into a core, and light going out from the core to a light receiving element may be converged.

As mentioned heretofore, according to an optical wave guide under the present invention, it is possible to produce an optical wave guide that by reproduction method using a stamper and the like in easy and simple manners. And further, since it is possible to make a core material extremely thin at both end areas of core, even if core material comes out, it is possible to prevent or reduce the occurrence of light signals in core leaking out, and to keep the optical transmission quality of optical wave guide in preferable manners.

**Claims**

1. A method of producing an optical waveguide (1, 1A, 15, 16, 17, 18, 20, 23, 25, 26, 28, 29, 30, 31, 32, 40, 46, 91) on a cladding substrate (2) using a stamper (9, 13, 49) having a mold surface, wherein either a surface of the cladding substrate (2) or the mold surface have at least one slot (3) therein, and either the surface of the cladding substrate (2) or the mold surface have at least one exposed recess (6);
the method comprising:

   supplying core material (8) to said slot (3); and pressing the mold surface onto the substrate (2) to form a core (4, 55, 56, 94) in the slot (3) and on the substrate (2);
   **characterised in that:**

   core material (8) pinched between the substrate (2) and the mold surface over and adjacent said slot (3) is forced into said at least one recess.

2. A method for producing an optical wave guide (1, 1A, 15, 16, 17, 18, 20, 23, 25, 26, 28, 29, 30, 31, 32, 40, 46, 91) according to claim 1, wherein the cladding substrate (2) is formed on a supporting substrate.

3. A method according to claim 1 or claim 2, wherein the depth of the recess (6) is larger than the depth of the slot (3).

4. A method according to any one of claims 1 to 3, wherein a plurality of optical wave guides (1A) are produced, and wherein the recesses (6) of the wave guides (1A) are interconnected to each other.

5. A method according to claim 4, wherein the wave guides (1A) are arranged in a plurality of interconnected groups.

6. A method according to any one of the preceding claims, wherein the side walls of the recess (6) are inclined relative to the exposed surface of the cladding portion (2).

**Patentansprüche**

1. Verfahren zur Herstellung eines optischen Wellenleiters (1, 1A, 15, 16, 17, 18, 20, 23, 25, 26, 28, 29, 30, 31, 32, 40, 46, 91) auf einem Mantelsubstrat (2) unter Einsatz eines Stempels (9, 13, 49) mit einer Formoberfläche, wobei entweder eine Oberfläche des Mantelsubstrats (2) oder die Formoberfläche zumindest einen Spalt (3) aufweisen und entweder die Oberfläche des Mantelsubstrats (2) oder die Formoberfläche zumindest eine freiliegende Vertiefung (6) aufweisen;

   wobei das Verfahren Folgendes umfasst:

   das Zuführen von Kernmaterial (8) zu dem Spalt (3) und
   das Pressen der Formoberfläche auf das Substrat (2) zur Ausbildung eines Kerns (4, 55, 56, 94) in dem Spalt (3) und auf dem Substrat (2);
   **dadurch gekennzeichnet, dass:**

   zwischen dem Substrat (2) und der Formoberfläche über dem Spalt (3) und an diesen angrenzend zusammengedrücktes Kernmaterial (8) in die zumindest eine Vertiefung gedrückt wird.

2. Verfahren zur Herstellung eines optischen Wellenleiters (1, 1A, 15, 16, 17, 18, 20, 23, 25, 26, 28, 29, 30, 31, 32, 40, 46, 91) nach Anspruch 1, worin das Mantelsubstrat (2) auf einem Trägersubstrat ausgebildet ist.

3. Verfahren nach Anspruch 1 oder 2, worin die Tiefe der Vertiefung (6) größer ist als die des Spalts (3).

4. Verfahren nach einem der Ansprüche 1 bis 3, worin eine Vielzahl optischer Wellenleiter (1A) hergestellt wird und worin die Vertiefungen (6) der Wellenleiter (1A) miteinander verbunden sind.

5. Verfahren nach Anspruch 4, worin die Wellenleiter (1A) in einer Vielzahl untereinander verbundener Gruppen angeordnet werden.

6. Verfahren nach einem der vorangegangenen Ansprüche, worin die Seitenwände der Vertiefung (6) in Bezug auf die freiliegende Oberfläche des Verkleidungsabschnitts (2) schräg sind.

**Revendications**

1. Procédé de production d'un guide d'ondes optiques (1, 1A, 15, 16, 17, 18, 20, 23, 25, 26, 28, 29, 30, 31, 32, 40, 46, 91) sur un substrat plaqué (2) en utilisant une matrice (9, 13, 49) ayant une surface moulée, où soit une surface du substrat plaqué (2) soit la surface moulée présente au moins une fente (3) dans celle-ci, et soit la surface du substrat plaquée (2) soit la surface moulée ont au moins un évidement exposé (6);

   la méthode comprenant:

   amener du matériau de noyau (8) à ladite fente (3); et
   presser la surface moulée sur le substrat (2) pour former un noyau (4, 55, 56, 94) dans la fente (3) et sur le substrat (2);
   **caractérisé en ce que:**

   le matériau de noyau (8) pincé entre le substrat (2) et la surface moulée sur et adjacente à ladite fente (3) est forcé dans ledit au moins un évidement.

2. Procédé de fabrication d'un guide d'ondes optiques (1, 1A, 15, 16, 17, 18, 20, 23, 25, 26, 28, 29, 30, 31, 32, 40, 46, 91) selon la revendication 1, où le substrat plaqué (2) est formé sur un substrat de support.

3. Procédé selon la revendication 1 ou la revendication 2, dans lequel la profondeur de l'évidement (6) est plus grande que la profondeur de la fente (3).

4. Procédé selon l'une quelconque des revendications 1 à 3, dans lequel plusieurs guides d'ondes optiques (1A) sont produits, et dans lequel les évidements (6) des guides d'ondes (1A) sont interconnectés entre eux.

5. Procédé selon la revendication 4, dans lequel les guides d'ondes (1A) sont agencés dans une pluralité de groupes interconnectés.

6. Procédé selon l'une quelconque des revendications précédentes, dans lequel les parois latérales de l'évidement (6) sont inclinées relativement à la surface exposée de la portion plaquée (2).

Fig. 1A

Fig. 1B

Fig. 2A

Fig. 2B

Fig. 2C

Fig. 3A

Fig. 3B

Ultraviolet ray

Fig. 3C

Fig. 4A

3    5    6

2

Fig. 4B

8

2

Fig. 4C

4    13

2

6    5    3    8

Fig. 4D

14(7)

5

2

4    8

Fig. 5A

8b     13

8a

8

2

Fig. 5B

8    8a   8b     13

2

Fig. 5C

8    8a,8b    13

2

Fig. 5D

13

2    4     8

Fig. 6

1A

6

Fig. 7

Fig. 8

Fig. 9

Fig. 10A

Fig. 10B

Fig. 10C

Fig. 10D

EP 1 298 462 B1

Fig. 11A

Fig. 11B

Fig. 11C

Fig. 11D

Fig. 12A

3   5

6

2

Fig. 12B

5   8

2   3

Fig. 12C

8

2   3   5   6

13

Fig. 12D

8

2

14(7)   5   8   16

Fig. 12E

4   6

Fig. 13A

Fig. 13B

Fig. 13C

Fig. 13D

Fig. 13E

Fig. 13F

Fig. 14A

Fig. 14B

Fig. 14C

Fig. 14D

Fig. 15A

11

12

Fig. 15B

9    21        21

12  22    11   22

Fig. 15C

8    3 5 6

2

12

Fig. 15D

13    4

2

12

Fig. 15E

14(7)   4 5    20

2

12        6

Fig. 16A

Fig. 16B

Fig. 16C

Fig. 16D

Fig. 17A

Fig. 17B

Fig. 17C

Fig. 17D

Fig. 18A

<u>27</u>

Fig. 18B

<u>28</u>

Fig. 18C

<u>29</u>

Fig. 18D

<u>30</u>

Fig. 19

Fig. 20

Fig. 21A

Fig. 21B

Fig. 22

**35b**  **36**  **34b**

**8**

**33**

Ultraviolet ray

**35a**  **34a**

Fig. 23

**33**  **38**

**33**

**3**  **6**  **37a**

**37b**

Fig. 24

Fig. 25A

Fig. 25B

Fig. 26

Fig. 27A

Fig. 27B

Fig. 27C

Fig. 27D

Fig. 28A

Fig. 28B

Fig. 28C

Fig. 29

Fig. 30A

Fig. 30B

Fig. 31A

4    48

11

6    3    47    12    6

Fig. 31B

3    49

d

D

T

47    12

Fig. 32

6a    4    7    8

6

3    2

Fig. 33

**Fig. 34**

**Fig. 35**

Fig. 36A

Fig. 36B

Fig. 37

Fig. 38

Fig. 39

Fig. 40A

91

94

Fig. 40B

91

94

Fig. 41

Fig. 42

Fig. 43

Fig. 44A

Fig. 44B

**EP 1 298 462 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63281351 B
- US 9281351 B
- US 2679760 A
- US 9101425 B